# EUROPÄISCHE PATENTSCHRIFT

(11) **EP 2 614 099 B1**
(45) Veröffentlichungstag und Bekanntmachung des Hinweises auf die Patenterteilung: **30.09.2015**
(21) Anmeldenummer: 11746210.1
(22) Anmeldetag: 03.08.2011
(51) Int. Cl.: C08G 18/80, B32B 17/10, C03C 17/32, H05B 3/74

(54) **BESCHICHTUNG AUF POLYURETHANBASIS FÜR ANZEIGEBEREICHE**
POLYURETHANE-BASED COATING FOR DISPLAY AREAS
REVÊTEMENT À BASE DE POLYURÉTHANE POUR ZONES DE VISUALISATION

(30) Priorität: 11.09.2010 DE 102010045149
(43) Veröffentlichungstag der Anmeldung: 17.07.2013
(73) Patentinhaber: Schott AG, 55122 Mainz (DE); Bayer Intellectual Property GmbH, 40789 Monheim am Rhein (DE)
(72) Erfinder: STRIEGLER, Harald, 55437 Ockenheim (DE); GERHARTZ-QUIRIN, Bernadette, 51381 Leverkusen (DE)
(86) Internationale Anmeldenummer: PCT/EP2011/063349
(87) Internationale Veröffentlichungsnummer: WO 2012/031837

(56) Entgegenhaltungen:
- EP-A1- 1 867 613
- WO-A1-2007/025011
- WO-A1-2007/114808

## Beschreibung

Die Erfindung betrifft eine Polyurethanbeschichtung mit niedriger Transmission im Wellenlängenbereich des sichtbaren Lichts für Anzeigebereiche auf Glas-, Glaskeramik- oder Kunststoff-Formkörpern, insbesondere für Anzeigebereiche von Kochflächen oder Bedienblenden von Haushaltsgeräten.

Beschichtungen für Anzeigebereiche ("Displayschichten") auf der Basis von organischen Bindemittelsystemen sind seit langem bekannt. Sie dienen bei Kochflächen aus gefärbter, unterseitig genoppter Glaskeramik (z.B. CERAN HIGHTRANS^{®}) dazu, die genoppte Unterseite im Anzeigebereich einzuebnen, damit die Leuchtmittel (Glühlampen, LEDs etc.) klar durch die Glaskeramik hindurch scheinen. Die Anzeigen dienen z.B. zur Warnung vor noch vorhandener Hitze in der Kochfläche (sogenannte Restwärmeanzeigen).

Die Höhe der Noppen beträgt üblicherweise 0,1 - 0,3 mm, ihr Abstand liegt bei 1 - 5 mm, und sie sind in der Regel versetzt zueinander angeordnet. Durch die Noppen wird die mechanische Stabilität (Stoß- u. Biegefestigkeit) der Glaskeramikplatte erhöht und der Kontakt zu der Keramisierungsunterlage verringert (vgl. WO 2003 086 019 A1).

In DE 41 04 983 C1 werden beispielsweise Sichtfenster aus genoppten Platten beschrieben. Die Noppentäler einer Glas- oder Glaskeramikscheibe werden mit einem aushärtenden Kunstharz gefüllt, wodurch eine glatte, ebene Scheibenunterseite erhalten wird, die eine weitestgehend klare Durchsicht ermöglicht. Als Kunstharze werden neben Epoxidharzen und Siliconharzen auch Polyurethanharze genannt. Diese Kunstharze können auch eingefärbt werden, um besondere optische Wirkungen zu erzielen. Entsprechend der Noppenhöhe beträgt die Dicke der Kunstharzschicht 0,01 - 1 mm.

In DE 41 04 983 C1 werden keine Bedingungen zur Aushärtung der Kunstharze genannt, so dass der Fachmann aus wirtschaftlichen Gründen selbständig aushärtende Kunstharzsysteme (z.B. bei Zimmertemperatur chemisch vernetzende Zweikomponentensysteme sowie luft- oder feuchtigkeitsvernetzende Systeme) auswählen würde.

Eine Weiterentwicklung der DE 41 04 983 C1 wird in DE 44 24 847 B4 genannt. Danach wird auf dieselben aushärtenden Kunstharze (u.a. auch Polyurethanharze) eine Kunststoffmaske mit Schriftzügen aufgelegt und ausgehärtet. Auch in dieser Schrift finden sich keine Hinweise zu den Bedingungen, unter denen die Harze vernetzen oder unter welchen Aspekten das Polyurethanharz ausgewählt werden sollte, so dass der Fachmann hinsichtlich des Polyurethansystems von einem klassischen Zweikomponentensystem ausgehen würde, das bei Zimmertemperatur durch Polyaddition vernetzt. Nahe liegend wäre auch ein Einkomponenten-Polyurethan-Lack, der auf feuchtigkeitshärtenden Polyisocyanaten basiert und ebenfalls bei Zimmertemperatur an Luft selbständig aushärtet. Thermisch aushärtende Lacksysteme sind aufgrund des zusätzlichen Heizschritts, der damit verbundenen Kosten und der Gefahr, dass sich die aufgelegte Kunststoffmaske verformt oder schmilzt, nicht nahe liegend.

Genoppte Glaskeramik-Kochflächen haben generell den Nachteil, dass die Noppen in den Anzeigebereichen zu Verzerrungen der Leuchtanzeigen führen, wenn nicht in einem zusätzlichen Schritt die genoppte Unterseite geglättet wird (entweder durch aufgetragene Harze oder durch Abschleifen). Noppen im Heißbereich können bei betriebenen Heizstrahlern (Halogen- oder IR-Heizelemente) auch die Ästhetik stören.

Beidseitig glatte Glaskeramik-Kochflächen haben die genannten Nachteile nicht. Bei beidseitig glatten, nicht eingefärbten Glaskeramik-Kochflächen, die für das sichtbare Licht transparent sind und daher auf der Unterseite eine opake Beschichtung tragen, können die Anzeigebereiche sogar unbeschichtet sein und beispielsweise ein LCD-Display zur Anzeige von Kochrezepten hinter der Glaskeramik aufweisen. Eine solche Kochfläche wird in EP 1 837 314 B1 beschrieben.

Die Anzeigebereiche können aber auch derart beschichtet sein, dass die Sicht in das Innere der Kochmulde durch die Beschichtung hindurch nicht möglich ist, betriebene Leuchtmittel, die unterhalb der Beschichtung angeordnet sind, aber dennoch ausreichend hell hindurchscheinen. Diese Ausführung erfordert nicht unbedingt großflächige LCD-Displays, um den Anzeigebereich vollständig auszufüllen, sondern ist auch geeignet für die kostengünstigeren 7-SegmentAnzeigen, Anzeigen einzelner Symbole, Piktogramme oder Schriftzüge. Der Vorteil beschichteter Anzeigebereiche ist, dass der Kochmuldenhersteller Gestaltungsfreiheit hinsichtlich der Anordnung und Kombination verschiedener Leuchtmittel gewinnt.

Beschichtungen, die für solche Anzeigebereiche von beidseitig glatten, nicht eingefärbten, transparenten Glaskeramik-Kochflächen geeignet sind, werden in DE 10 2006 027 739 B4 beschrieben. Die genannten Edelmetallbeschichtungen zeichnen sich u.a. dadurch aus, dass sie das sichtbare Licht kaum streuen (die Streuung liegt bei unter 1 %) und dass sie aufgrund ihrer geringen Transparenz für das sichtbare Licht (die Transmission für Wellenlängen von 400 - 750 nm liegt bei 1 - 21 %) die Sicht auf die Platinen, Kabel und andere Bauelemente innerhalb der Kochmulde verhindern. Die Leuchtmittel, die unterhalb der beschichteten Kochfläche im Anzeigebereich angeordnet sind, strahlen daher im Betrieb klar durch die beschichtete Glaskeramik-Kochfläche hindurch und werden im betriebslosen Zustand durch die Beschichtung verdeckt. Von Nachteil an dieser hochwertigen Beschichtung sind die hohen Kosten für die Edelmetalle, die erforderlichen hohen Einbrandtemperaturen (ca. 800 °C) sowie die eingeschränkte Farbauswahl (erhältlich sind nur schwarze, braune, silberne, goldene oder kupferne Schichten).

In dem Patent DE 10 2006 027 739 B4 wird erwähnt, dass die bekannten organischen Beschichtungen (Polyurethan-, Silicon-, Epoxidharz-Lacke), die mit organischen Pigmenten, Pigmentruß, anorganischen Pigmenten oder Nanopartikeln gefärbt sein können, den erfundenen Edelmetallschichten hinsichtlich mechanischer, chemischer und thermischer Beständigkeit deutlich unterlegen sind. In dem Patent werden keine weiteren Angaben über die Zusammensetzung der organischen Bindemittel gemacht.

In WO 2007 025 011 A1 werden Polyurethanschichten als Kratzschutz für Handydisplays und andere Displaybauteile vorgeschlagen. Die Polyurethanschichten können ungefärbt oder getönt sein. Es wird kein Hinweis gegeben, womit die Färbung erzeugt werden kann, wozu und wie stark die Displaybeschichtung getönt werden soll. Das Polyurethansystem kann u.a. thermisch gehärtet werden und entweder ein Zweikomponentensystem oder ein Einkomponentensystem sein. Das Zweikomponentensystem kann aus einer Polyesterpolyol-Komponente und einer Diisocyanat-Komponente bestehen. Die Schrift enthält keinen Hinweis, welches System bevorzugt wird. Die Ein- und Zweikomponentensysteme werden gleichwertig diskutiert, durch Rotationsbeschichtung aufgebracht, wobei ein lokal begrenzter Auftrag oder gar strukturiertes Beschichten nicht möglich sind.

Aus WO 2003 098 115 A1, DE 10 2007 030 503 B4, FR 2 885 995 B1 und US 2007/0108184 A1 sind gesputterte Beschichtungen für Anzeigebereiche in Kochflächen bekannt. Diese Schichten ergeben vergleichbar brillante Anzeigebereiche wie Edelmetallschichten, sind jedoch aufgrund der Technologie der Gasphasenabscheidung bei der Herstellung kleiner Losgrößen extrem teuer und auch nur mit Hilfe aufwändiger Maskierungstechnologie strukturierbar.

Die Beschichtung von Anzeigebereichen kann auch - ähnlich wie bei den in DE 10 2006 027 739 B4 beschriebenen Schichten - mit Nanoschichten aus metallorganisch gebundenem Titan, Zirkon, Eisen etc. (sogenannten Lüsterfarben) erfolgen. Derartige Schichten sind z.B. aus WO 2008 047 034 A2 bekannt. Nachteil dieser Schichten ist, dass sie bei ähnlich hohen Temperaturen wie die erwähnten Edelmetallschichten eingebrannt werden müssen, um die Umwandlung der metallorganischen Verbindungen in die entsprechenden Oxide zu erreichen.

Neben den bereits genannten Beschichtungen für Anzeigebereiche sind aus JP 2003 086 337 A2 und DE 10 2009 010 952 (noch nicht offengelegt) auch Siebdruckbeschichtungen auf Basis von Alkylsilicaten (Sol-Gel-Systemen) bekannt. Der wesentliche Nachteil dieser Systeme ist, dass das Sol aufgrund der zutretenden Luftfeuchtigkeit bereits während der Verarbeitung der Farbe beginnt zu vernetzen, so dass nur dann von Kochfläche zu Kochfläche vergleichbar transparente Schichten erhalten werden können, wenn fortlaufend Farbe zugeführt und der Beschichtungsprozeß kontinuierlich durchgeführt wird. Die Sol-Gel-Farben haben außerdem eine relativ geringe Lagerstabilität von nur wenigen Monaten und verändern sich bei Temperaturschwankungen während des Transports oder der Lagerung. Bei Überschreitung der Lagerdauer oder ungünstigen Lager- oder Transportbedingungen kommt es zu Viskositätsänderungen oder die Farbe geliert im ungeöffneten Gebinde. Die Schichten enthalten ferner Effektpigmente, die das sichtbare Licht erheblich streuen, so dass Zahlen, Buchstaben oder Symbole verschwommen angezeigt werden.

Daher besteht die Aufgabe, ein Beschichtungssystem für Anzeigebereiche auf glatten, transparenten Formkörpern zu finden, das
- preiswert,
- stabil bei der Lagerung und der Verarbeitung,
- bei niedrigen Temperaturen vernetzt (vorzugsweise unter 200 °C),
- einfach strukturierbar ist und
- eine kratzfeste, haftfeste Beschichtung ergibt, die
- in zahlreichen Farbtönen erhältlich,
- chemisch beständig gegenüber Wasser und Öl,
- farbstabil bei thermischer Belastung bis 150 °C ist;
- die Stoß- und Biegefestigkeit des Substrats nicht unzulässig stark herabsetzt,
- ausreichend transparent für Leuchtanzeigen ist und
- ausreichend opak ist, um die betriebslosen Leuchtanzeigen und andere Bauteile zu verdecken.

In besonderen Fällen soll das Beschichtungssystem auch für kapazitive Berührungsschalter oder Infrarot-Berührungsschalter geeignet sein und eine Streuung unter 6 % haben.

Die Lösung der Aufgabe gelingt mit einem eingefärbten, organischen Lack auf Basis blockierter Polyisocyanate.

Derartige Einbrenn-Polyurethansysteme haben den Vorteil, dass sie bereits bei sehr niedrigen Vernetzungstemperaturen und sehr kurzen Vernetzungszeiten, die weder bei den bekannten Sol-Gel-Systemen, noch den bekannten Edelmetall-Systemen möglich sind, ausreichende Kratz- und Haftfestigkeiten erreichen, dass bei geeigneter Pigmentierung oder Einfärbung Schichten mit geringer Streuung zugänglich sind, dass sie um das 10 - 100fache kostengünstiger als die erwähnten Edelmetallbeschichtungen sind, dass sie stabil sind bei der Lagerung und der Verarbeitung sowie dass sie mittels Siebdruck in einfacher Weise strukturiert aufgebracht werden können und auch die übrigen Anforderungen an Beschichtungen für Anzeigebereiche erfüllen.

Das blockierte Polyisocyanat spaltet erst bei erhöhter Temperatur das Blockierungsmittel ab, so dass die Vernetzungsreaktion durch thermische Behandlung gestartet werden muss. Zum Starten der Vernetzungsreaktion genügen relativ niedrige Temperaturen von nur 100 - 250 °C, vorzugsweise 160 - 200 °C. Aufgrund der hohen Transparenz und des geringen Streuvermögens des reinen Polyurethanfilms sind durch geeignete Auswahl, Kombination und Mengenanteile von Farbmitteln beliebig viele Farbtöne und auch die gewünschte Transmission einstellbar. Mit Farbstoffen oder feinteiligen Pigmenten sind auch Schichten mit geringer Streuung möglich, wenn die Rauheit des unbeschichteten Substrats, sowie die Rauheit des ausgehärteten Polyurethanfilms jeweils weniger als Rₐ = 0,5 µm betragen, insbesondere weniger als Rₐ = 0,3 µm und bevorzugt Rₐ = 0,001 µm bis Rₐ = 0,1 µm. Das Polyurethansystem hat auch die geforderten mechanischen und chemischen Eigenschaften und kann siebdruckfähig eingestellt werden, so dass Strukturen wie z.B. Linienbänder, Punkte o.ä. mit geringem technischen Aufwand hergestellt werden können. Dadurch können neben individuell gestalteten Displaybereichen auch dekorative Elemente in einem einzigen Verfahrensschritt aufgebracht werden.

Aus der großen Anzahl verfügbarer Polyisocyanate, also mehrfunktionellen Isocyanaten mit mehreren freien Isocyanatgruppen wie
- aromatischen Polyisocyanaten, z.B. 2,4-Toluylendiisocyanat (TDI), 4,4'-Diphenylmethandiisocyanat (MDI),
- cycloaliphatischen und araliphatischen Polyisocyanaten, z.B. Isophorondiisocyanat (IPDI), 2,4-Methylcyclohexyldiisocyanat (HTDI), Xylylendiisocyanat (XDI),
- aliphatischen Polyisocyanaten, z.B. Hexamethylendiisocyanat (HDI) oder Trimethylhexamethylendiisocyanat (TMDI),
werden aliphatische Isocyanate bevorzugt verwendet, weil sie die thermisch stabilsten Polyurethane bilden. Insbesondere mit HDI können Lacke erhalten werden mit ausgezeichneter thermischer Stabilität und Vergilbungsresistenz. In den Lacken werden i.d.R. nicht die monomeren Isocyanate eingesetzt, sondern Oligomere oder Polymerisate der Monomeren, z.B. ihre Dimere, Trimere oder höhere Polymerisate sowie Biurete, Isocyanurate oder Addukte an Trimethylolopropan oder andere mehrwertige Alkohole, weil durch die Molekülvergrößerung schwerflüchtige, leichter zu handhabende Komponenten erhalten werden.

Mit aliphatischen Isocyanaten können Urethane erzeugt werden, die sich erst bei 200 - 250 °C zersetzen. Die thermische Stabilität von Polyurethanschichten aus aliphatischen Polyisocyanaten ist daher sogar ausreichend für die Anwendung in Anzeigebereichen von Kochflächen, weil im Anzeigebereich von Kochflächen auf der Unterseite im ungünstigsten Fall kurzzeitig höchstens 150 °C auftreten, wenn z.B. ein heißer Kochtopf auf den Anzeigebereich gelangt. In der Regel wird durch diese Art der Fehlbedienung jedoch zum Schutz der unter dem Anzeigebereich befindlichen Elektronik ein akustisches Warnsignal ausgelöst und die Kochmulde abgeschaltet.

Damit ein verarbeitungs- und lagerstabiler Lack erhalten wird, müssen blockierte Polyisocyanate (sogenannte Einbrennurethanharze, EBU-Harze) eingesetzt werden. Als Blockierungsmittel eignen sich neben Alkoholen und Phenolen auch andere Brönstedsäuren (Protonendonatoren, Verbindungen mit acidem Wasserstoff) wie Thioalkohole, Thiophenole, Oxime, Hydroxamsäureester, Amine, Amide, Imide, Lactame oder Dicarbonylverbindungen und insbesondere ε-Caprolactam, Butanonoxim, Dimethylpyrazol, Diisopropylamin und Malonsäureester wie z.B. Diethylmalonat. Während mit Butanonoxim-blockiertem HDI-Polyisocyanat Lacke formuliert werden können, die bereits bei 140 - 180 °C (5 - 60 min) aushärten, sind bei ε-Caprolactam blockiertem HDI-Polyisocyanat etwas höhere Temperaturen zur Vernetzung notwendig (160 -240 °C, 5 - 60 min). Lack-Harze, die mit Diethylmalonat blockiertem HDI-Polyisocyanat vernetzt werden härten sogar schon bei 100 - 120 °C aus. Da bei der Vernetzung das Blockierungsmittel freigesetzt wird und Malonsäurediethylester keine und ε-Caprolactam im Vergleich zu Butanonoxim eine weniger kritische Einstufung als Gefahrenstoff hat, werden mit Malonsäureester oder (trotz der höheren Vernetzungstemperatur) mit ε-Caprolactam blockierte, aliphatische Polyisocyanate bevorzugt. Butanonoxim, ε-Caprolactam und die meisten anderen Blockierungsmittel entweichen bei der Vernetzung zu einem erheblichen Anteil aus dem Lackfilm und werden mit dem Abluftstrom des Trockners aus dem Lack entfernt. Dadurch verschiebt sich das Reaktionsgleichgewicht von der Seite der Ausgangskomponenten auf die Seite des Polyurethans.

Beispiele für geeignete, blockierte Polyisocyanate sind z.B. die Desmodur^{®}-Typen von Bayer MaterialScience Desmodur^{®} BL 3175 SN und Desmodur^{®} BL 3272 MPA. Tabelle 1 gibt einen Überblick der Eigenschaften dieser Harze. Aus dem Gehalt blockierter Isocyanatgruppen lässt sich das Äquivalentgewicht berechnen. Sofern die durchschnittliche NCO-Funktionalität der blockierten Polyisocyanate bekannt ist, lässt sich daraus das durchschnittliche Molekulargewicht bestimmen. Unter NCO-Funktionalität versteht man die Anzahl an blockierten und gegebenenfalls freien NCO-Gruppen pro Molekül.
Das durchschnittliche Molekulargewicht bevorzugter blockierter Polyisocyanate liegt bei 800 - 2000 g/mol. Harze mit Molekulargewichten von 2000 - 10000 g/mol können aber ebenfalls geeignet sein.
Bei geeigneten EBU-Harzen liegt die NCO-Funktionalität bei ≥ 2, insbesondere bei 2,5 - 6, besonders bevorzugt bei 2,8 - 4,2. Es sind aber auch Harze mit mehr als 6 blockierten Isocyanatgruppen pro Molekül geeignet, wenn auch nicht bevorzugt.
Es handelt sich in der Regel um trimere Polyisocyanate, aber auch dimere, höher oligomere oder polymere blockierte Polyisocyanate sind geeignet. Bevorzugt sind Polyisocyanate mit Isocyanurat-Strukturen.

**Tab. 1a: Eigenschaften geeigneter EBU-Harze**

| Desmodur^{®} | Typ | NCO-Gehalt, blockiert | Äquivalentgewicht |
|---|---|---|---|
| BL 3175 SN | Butanonoxim-blockiertes, aliphatisches Polyisocyanat auf Basis HDI (75%ig in Solvent-naphtha 100) | ca. 11,1 % | ca. 378 g/Val bez. auf Lieferform; ca. 265 g/Val bez. auf Festkörper |
| BL 3272 MPA | Caprolactam-blockiertes, aliphatisches Polyisocyanat auf Basis HDI (72%ig in 1-Methoxy-propylacetat-2) | ca. 10,2 % | ca. 412 g/Val bez. auf Lieferform; ca. 296 g/Val bez. auf Festkörper |

**Tab. 1b: Eigenschaften geeigneter EBU-Harze**

| Desmodur^{®} | Viskosität bei 23 °C (DIN EN ISO 3219/A.3) | Dichte bei 20 °C (DIN EN ISO 2811-2) | Mittleres Molekulargewicht (Mn) |
|---|---|---|---|
| BL 3175 SN | 3300 ± 400 mPa s (75%ig in Solvent-naphtha 100) | ca. 1,06 g/ml | ca. 1000 g/mol |
| BL 3272 MPA | 2700 ± 750 mPa s (72%ig in 1-Methoxy-propylacetat-2) | ca. 1,10 g/ml | ca. 1100 g/mol |

Die mittleren Molekulargewichte können z. B. über eine GPC-Messung (Gelpermeationschromatografie) bestimmt werden.

Als Reaktionspartner für das blockierte Polyisocyanat können prinzipiell alle Verbindungen, die ein reaktives (acides) Wasserstoffatom enthalten, dienen. Polyole, insbesondere Polyesterpolyole und Polyetherpolyole sind hervorragend geeignet, da mit diesen Komponenten mechanisch und chemisch sehr stabile Beschichtungen erhalten werden können. Aber auch Amine, Polyamine, Umesterungsprodukte von Rizinusöl, Leinöl und Sojaöl mit Triolen, Alkyd-, Epoxid-, Silicon-, Phenol- oder Polyacrylatharze, Vinylpolymere, Celluloseester wie Ethylcellulosen können als Reaktionspartner dienen.

Durch die Reaktion der blockierten oder nach Abspaltung des Blockierungsmittels freien Isocyanatgruppen mit Verbindungen, die reaktive Wasserstoffatome enthalten, bildet sich durch Polyaddition das Polyurethan. Die Eigenschaften des Polyurethans hängen nicht nur von der IsocyanatKomponente ab, sondern auch ganz wesentlich von der gewählten H-aciden Verbindung. Natürlich können auch verschiedene H-acide Verbindungen kombiniert werden, z.B. Polyesterpolyole mit Silicon- oder Epoxidharzen, insbesondere, um die Filmeigenschaften speziellen Anforderungen anzupassen.

Als besonders geeignet für Beschichtungen von Anzeigebereichen haben sich Polyesterpolyole, insbesondere verzweigte Polyesterpolyole mit einem hohen Hydroxylgruppenanteil (3 und mehr Hydroxylgruppen pro Molekül, entsprechend einem OH-Anteil von 2 - 8 Gew.-%, insbesondere 3 - 6 Gew.-%) und einem mittleren Molekulargewicht im Bereich von 1000 - 2000 g/mol erwiesen. Denn mit diesen Polyolen, die über ihre Hydroxygruppen zu stark vernetzten Polyurethanfilmen führen, können besonders harte, kratzfeste sowie chemisch beständige Schichten erzeugt werden, die aber überraschender Weise dennoch flexibel genug sind, dass sie selbst von Glaskeramik (einem Substrat mit extrem niedriger thermischer Ausdehnung) nicht abplatzen. Je stärker die Polyesterpolyole verzweigt sind und je mehr Hydroxylgruppen sie aufweisen, umso stärker vernetzt ist das gebildete Polyurethan.

Beispiele für geeignete Polyesterpolyole sind die Desmophen®-Typen von Bayer MaterialScience Desmophen® 651, Desmophen® 680 und Desmophen® 670. Nicht geeignet ist z.B. das wenig verzweigte Desmophen® 1800 mit geringem OH-Anteil, weil es nur einen schwach vernetzten, vorwiegend linear aufgebauten Polyurethanfilm ergibt, der entsprechend weich ist. In Tabelle 2 sind einige charakteristische Eigenschaften der Harze aufgeführt.

**Tab.2a: Eigenschaften verschiedener Polyesterpolyole**

| Desmophen^{®} | Lieferform (Lff.) | OH-Anteil (DIN 53240/2) | Molekülstruktur | Filmhärte | Äquivalentgewicht (Lff.) |
|---|---|---|---|---|---|
| 651 MPA | 65 %ig in MPA | 5,5 ± 0,4 % | verzweigt | sehr hart | ca. 310 g/Val |
| 670 | 100 %ig | 4,3 ± 0,4 % | wenig verzweigt | hart | ca. 395 g/Val |
| 680 BA | 70 %ig in BA | 2,2 ± 0,5 % | verzweigt | sehr hart | ca. 770 g/Val |
| 1800 | 100 %ig | 1,8 ± 0,1 % | wenig verzweigt | sehr weich | ca. 935 g/Val |

**Tab.2b: Eigenschaften verschiedener Polyesterpolyole**

| Desmophen^{®} | Viskosität bei 23 °C (DIN EN ISO 3219/A.3) | Dichte bei 20 °C (DIN EN ISO 2811-2) | Mittleres Molekulargewicht (Mn) |
|---|---|---|---|
| 651 MPA | 14500 ± 3500 mPa s | ca. 1,11 g/ml | ca. 1620 g/mol |
| 670 | 2200 ± 400 m Pa s (80%ig in Butylacetat) | ca. 1,17 g/ml | ca. 1260 g/mol |
| 680 BA | 3000 ± 500 mPa s | ca. 1,08 g/ml | ca. 1300 g/mol |
| 1800 | 21500 ± 2500 mPa s | ca. 1,19 g/ml | ca. 2530 g/mol |

Die Molekülstruktur der meisten handelsüblichen Polyesterpolyole und auch der oben genannten Desmophen^{®}-Typen kann nicht exakt angegeben werden, da bei der Herstellung i.d.R. ein Polymergemisch erhalten wird. Die Eigenschaften der Polyesterpolyole können jedoch durch die Reaktionsführung reproduzierbar eingestellt werden, wobei die Produkte durch den Hydroxylgehalt (OH-Zahl), das mittlere Molekulargewicht, ihre Dichte und die Viskosität charakterisierbar sind. Die durchschnittliche OH-Funktionalität wird durch die Wahl der Ausgangskomponenten bestimmt.

Die Kontrolle und die Kenntnis des Hydroxylgehalts (OH-Gehalts) der Polyol-Komponente (H-acide Komponente, auch "Binder" genannt) und die Kenntnis des Gehalts an blockierten Isocyanatgruppen (NCO-Gehalt) der PolyisocyanatKomponente, die auch als "Härter" bezeichnet wird, sind deshalb wichtig, weil theoretisch eine maximale Vernetzung der Beschichtung nur bei dem Einsatz gleicher stöchiometrischer Mengen an Härter und Binder erfolgt, wenn das stöchiometrische Verhältnis von Härter zu Binder also 1 : 1 beträgt gemäß folgender Reaktionsgleichung:

R-N=C=O + HO-R' → R-NH-CO-O-R'

Isocyanat Alkohol Urethan

Die bei dem stöchiometrischen Verhältnis von 1 : 1 theoretisch erreichbare, maximale Vernetzungsdichte ist entscheidend für die Eigenschaften der Beschichtung (Haftung, Kratzfestigkeit, Flexibilität, chemische und thermische Beständigkeit). Härter und Binder sollten daher in dem Polyurethansystem in dem stöchiometrischen Verhältnis 1 : 1 vorliegen. Die hierzu notwendigen Mengen können über das Äquivalentgewicht berechnet werden.

Die Reduzierung des Härteranteils (Untervernetzung) führt zu flexibleren Beschichtungen mit geringerer mechanischer und chemischer Stabilität und sollte daher vermieden werden. Die Erhöhung des Härteranteils (Übervernetzung) erhöht die Vernetzungsdichte, weil die überschüssigen Isocyanatgruppen mit Luftfeuchte unter Bildung von Harnstoffgruppen reagieren. Der Einsatz von Härter zu Binder in den Äquivalent-Verhältnissen 1,1 : 1 bis 2 : 1 kann daher sinnvoll sein, um über die Härte der Beschichtung die Kratzfestigkeit oder die Haftfestigkeit auf dem Substrat zu erhöhen. Da die Nebenreaktion mit Wasser auch durch andere Faktoren wie den Wassergehalt des Lösungsmittels oder die Restfeuchtigkeit des Substrats ermöglicht wird, wodurch dem System Isocyanatgruppen entzogen werden, die dann nicht mehr für eine Reaktion mit den Hydroxygruppen der Polyol-Komponente zur Verfügung stehen, werden Äquivalent-Verhältnisse von Härter zu Binder in der Größenordnung von 1,1 : 1 bis 2 : 1, insbesondere von 1,3 : 1 bis 1,6 : 1, bevorzugt.

Um mit dem beschriebenen Bindemittelsystem, das farblos und durchsichtig ist, einen Lack zu erhalten, der transparent genug für Leuchtanzeigen und gleichzeitig ausreichend opak ist, muss das Polyurethansystem aus geblocktem Polyisocyanat und H-acider Komponente (z.B. Polyhydroxy-Harz) eingefärbt werden, so dass die Transmission für sichtbares Licht, τᵥᵢₛ, im Bereich von 1 - 20 % liegt.
Geeignet sind Farbmittel, die dauerhaft bis 100 °C thermisch stabil sind und kurzzeitig Temperaturbelastungen von 150 °C bis zu 250 °C standhalten. Höheren Temperaturen sind die Farbmittel normalerweise bei der Vernetzung des Bindemittelsystems und im späteren Gebrauch nicht ausgesetzt.

Neben den thermisch sehr stabilen anorganischen Farbmitteln sind daher auch organische Farbmittel geeignet. Unter Farbmitteln werden gemäß DIN 55943 alle farbgebenden Substanzen verstanden. Die Farbmittel sollten wegen der gesetzlichen Bestimmungen für Elektro- und Elektronikgeräte kein Blei, sechswertiges Chrom (Cr^{+VI}), Cadmium oder Quecksilber enthalten. Geeignet sind anorganische Buntpigmente und Schwarzpigmente wie Eisenoxidpigmente, Chromoxidpigmente oder oxidische Mischphasenpigmente mit Rutil- oder Spinellstruktur und anorganische Weißpigmente (Oxide, Carbonate, Sulfide). Als Beispiele für geeignete Pigmente seien die Eisenoxidrot-Pigmente aus Hämatit (α-Fe₂O₃), Eisenoxidschwarz-Pigmente mit der ungefähren Zusammensetzung Fe₃O₄ sowie die Mischphasenpigmente Cobaltblau CoAlO₄, Zinkeisenbraun (Zn,Fe)FeO₄, Chromeisenbraun (Fe,Cr)₂O₄, Eisenmanganschwarz (Fe,Mn)(Fe,Mn)₂O₄, Spinellschwarz Cu(Cr,Fe)₂O₄ und auch Graphit sowie als anorganische Weißpigmente TiO₂ und ZrO₂ genannt.

Um spezielle Effekte bei der Farbgebung zu erzielen, können auch anorganische Glanzpigmente (Metalleffektpigmente, Perlglanzpigmente und Interferenzpigmente) oder anorganische Leuchtpigmente eingesetzt werden. Als Metalleffektpigmente sind z.B. plättchenförmige Teilchen aus Aluminium-, Kupfer- oder Kupfer-Zink-Legierungen geeignet, als Perlglanzpigmente z.B. Bismutoxidchlorid, als Interferenzpigmente feuergefärbte Metallbronze, Titandioxid auf Glimmer, Eisenoxid auf Aluminium, auf Glimmer, auf Siliciumdioxid oder auf Aluminiumoxid, als Leuchtpigmente sind geeignet fluoreszierende Pigmente wie silberdotiertes Zinksulfid oder phosphoreszierende Pigmente wie kupferdotiertes Zinksulfid.

Als organische Farbmittel können organische Buntpigmente (z.B. Monazopigmente und Diazopigmente wie Naphthol AS, Dipyrazolon), polycyclische Pigmente (z.B. Chinacridonmagenta, Perylenrot), organische Schwarzpigmente (Anilinschwarz, Perylenschwarz), organische Effektpigmente (Fischsilber, flüssigkristalline Pigmente) oder organische Leuchtpigmente (Azomethinfluoreszenzgelb, Benzoxanthenfluoreszenzgelb) sowie organische Bunt- und Schwarzfarbstoffe (z.B. kationische, anionische oder nichtionische Farbstoffe wie Acridin, Kupferphthalocyanin, Phenthiazinblau, Disazobraun, Chinolingelb, Cobalt-, Chrom- oder Kupfer-Metallkomplexfarbstoffe der Azo-, Azomethin- und Phthalocyanin-Reihe, Azochromkomplexschwarz, Phenazinflexoschwarz) sowie organische Leuchtfarbstoffe (z.B. Thioxanthengelb, Benzanthronrot, Perylengrün) verwendet werden.

Der mittlere Teilchendurchmesser der Pigmente liegt üblicherweise im Bereich von 1 - 25 µm (bevorzugt bei 5 - 10 µm). D90 sollte unter 40 µm (bevorzugt bei 6 - 15 µm), D50 unter 25 µm (bevorzugt bei 6 - 8 µm) und D10 unter 12 µm (bevorzugt bei 2 - 5 µm) liegen. Plättchenförmige Pigmente sollten eine maximale Kantenlänge von 60 - 100 µm (bevorzugt 5 - 10 µm) haben, damit die Farbpaste mit Siebgewebeweiten 140 - 31 (entsprechend einer Maschenweite von 36 µm) oder 100 - 40 (entsprechend einer Maschenweite von 57 µm) problemlos gedruckt werden kann. Bei gröberen Pigmenten werden Schichten erhalten, die das sichtbare Licht zu stark streuen, so dass die Leuchtanzeige nicht mehr deutlich genug erkannt werden kann. Je feiner die Pigmente sind, umso geringer streut die Beschichtung im Anzeigebereich (Displayschicht) das sichtbare Licht und umso klarer (schärfer) wird die Anzeige. Bei den genannten Korngrößen tritt üblicherweise eine Streuung von 5 - 40 % (Wellenlängenbereich: 400 - 750 nm) auf (s. DE 10 2006 027 739 B4).

Bei der Verwendung von Pigmenten mit Korngrößen unterhalb von 1 µm kann die Streuung auf weniger als 6 % (0,1 - 6 %), insbesondere auf 4 - 5 %, reduziert werden, wodurch besonders klare Displayanzeigen möglich werden. Die Dispergierung der Nanoteilchen erfordert normalerweise einen erheblichen zusätzlichen Aufwand, der nicht immer durch den Gewinn an Anzeigequalität aufgewogen wird. Der Aufwand zur Pigmentierung mit Ruß hält sich aufgrund der verfügbaren Spezialpräparationen jedoch in Grenzen und ergibt Beschichtungen, die das Licht kaum streuen und besonders klare Anzeigen ermöglichen, die an die Anzeigequalität von Edelmetallbeschichtungen heranreichen.

Wie erwähnt sind auch Farbstoffe geeignet, also Farbmittel, die in dem Bindemittelsystem löslich sind, z.B. organische Metallkomplex-Farbstoffe wie die 1:2-Chrom-Metallkomplexfarbstoffe Orasol^{®} Braun 2 GL, Orasol^{®} schwarz CN und Orasol^{®} schwarz RLI der BASF SE oder anorganische Verbindungen mit färbenden Ionen wie Eisenchlorid, Wolframbronzen (NaₓWO₃), Berliner Blau Fe₄[Fe(CN)₆]₃ • H₂O, wenn sie ausreichend stark färben, thermisch stabil genug sind, um den Belastungen standzuhalten, die bei der Vernetzung des Polyurethansystems und im späteren Gebrauch auftreten. Die Farbmittel dürfen keine starken Oxidationsmittel sein, denn von starken Oxidationsmitteln wie Permanganaten oder Dichromaten würde das Bindemittelsystem unter Licht- oder Temperatureinwirkung schnell zersetzt. Mit Farbstoffen können Displayschichten mit überraschend niedriger Streuung (0,01 - 1 %) und Rauheit (Rₐ = 0,001 - 0,02 µm, vergleichbar mit dem unbeschichteten Substrat) erhalten werden.

Für eine hohe Anzeigequalität ist jedoch neben der bereits erwähnten geringen Rauheit und der geringen Streuung auch wichtig, dass die Farbe einen gleichmäßigen Verlauf hat, d.h., dass sich ein glatter Film ausbildet, in dem die Pigmente gleichmäßig verteilt sind und dass die ausgehärtete Displaybeschichtung keine groben, lichtundurchlässigen Teilchen, Verunreinigungen oder dergleichen enthält, die mit dem bloßen Auge erkennbar sind (z.B. Agglomerate, Staub,
Fussel, Körner mit einer Größe von über 200 µm, insbesondere 0,3 - 1,5 mm). Denn solche Teilchen oder Pigmentanhäufungen führen, wenn sie in den Strahlengang eines Leuchtmittels gelangen, zu dunklen Flecken mit einer Ausdehnung von 0,2 - 3 mm in der Anzeige, wodurch die Anzeigequalität trotz geringer Streuung und Rauheit erheblich gemindert wird. Aufgrund dieser Anforderung muss bei der Herstellung von Displayschichten mit excellenter Anzeigequalität auf Sauberkeit in der Produktion geachtet werden. Idealerweise wird unter Reinraumbedingungen produziert.

Der Pigmentanteil, der zur Erreichung der gewünschten Transmission von
1 - 20 % (für Wellenlängen im Bereich des sichtbaren Lichts) in der Beschichtung notwendig ist, hängt stark von der Schichtdicke der Beschichtung ab und liegt je nach Schichtdicke bei 0,1 - 45 Gew.-% (bezogen auf die ausgehärtete Beschichtung). Dem Pigmentanteil entspricht ein Polyurethananteil von
55 - 99,9 Gew.-%. Bei höheren Schichtdicken sind geringere Pigmentanteile als bei niedrigen Schichtdicken notwendig.

Die Dicke der Polyurethanbeschichtung kann zwischen 0,1 - 1000 µm, bevorzugt 5 - 20 µm gewählt werden. Bei niedrigeren Schichtdicken als 0,1 µm ist auch bei maximalem Pigmentanteil keine ausreichend opake Beschichtung mehr herstellbar. Ferner würden bei mehr als 45 Gew.-% Pigmentanteil die Kratz- und Haftfestigkeit nicht mehr ausreichend sein. Schichtdicken über 1000 µm sind normalerweise nicht üblich wegen des hohen Materialverbrauchs, der keine weiteren technischen Vorteile mit sich bringt. Aufgrund der hohen Transparenz und Flexibilität auch hart eingestellter Polyurethansysteme sind jedoch in besonderen Fällen auch Schichtdicken im Millimeterbereich möglich.

Wie erwähnt, ist zur Herstellung von Beschichtungen mit geringer Streuung Ruß besonders geeignet. Bei einer Schichtdicke von 8 - 12 µm sind 2 - 5 Gew.-% Ruß, insbesondere 3,6 ± 0,2 % Ruß (bezogen auf die ausgehärtete Beschichtung) notwendig, um die gewünschte Transmission von 1 - 20 % für sichtbares Licht zu erhalten. Geeignet sind Flammruße (Primärteilchengröße 10 - 210 nm), Furnaceruße (Primärteilchengröße 5 - 70 nm) und insbesondere die feinteiligen Gasruße (Primärteilchengröße 2 - 30 nm). Die Dispergierbarkeit kann erleichtert werden, wenn die Ruße oxidativ nachbehandelt werden, ihre Oberfläche also durch Erhitzen oder Behandlung mit starken Oxidationsmitteln ausgesprochen hydrophil eingestellt wird.

Dennoch genügt das Dispergieren mit dem Dissolver normalerweise nicht. Bei unzureichender Dispergierung sind in der Beschichtung viele kleine, schwarze Partikel, also noch unzerteilte Rußagglomerate aus agglomerierten Ruß-Primärteilchen, mit dem bloßen Auge erkennbar. Die Rußagglomerate stören die Klarheit der Anzeige erheblich, weil sie in den beleuchteten Bereichen als schwarze Punkte auffallen. Nahezu alle Rußagglomerate können zerteilt werden, indem die Farbe stärkeren Scherkräften ausgesetzt wird, z.B. mit Hilfe von Dreiwalzenwerken, Rührwerkskugelmühlen oder Extrudern (Schneckenknetern). Diese Verfahren haben aber den Nachteil, dass sie relativ aufwendig sind und dass sich die Rußkonzentration in der Farbe erheblich verändert, weil z.B. während der Verarbeitung Lösungsmittel verdunstet, Ruß als Staub verloren geht oder an den Geräteteilen anhaftet. Die reproduzierbar konstante Rußkonzentration in der Farbe (± 1 Gew.-%, insbesondere ±0,2 Gew.-% bezogen auf die ausgehärtete Beschichtung) ist jedoch neben reproduzierbar konstanter Schichtdicke die wichtigste Voraussetzung für die reproduzierbar konstante Transmission der Beschichtung.

Empfehlenswerter ist daher die Verwendung kommerziell erhältlicher Rußpasten. In diesen Rußpräparationen liegt der Ruß bereits in organischen Verbindungen optimal dispergiert vor, so dass in der Beschichtung keine Rußagglomerate mehr auftreten. Die Handhabung des Rußes ist deutlich einfacher, weil von den pastenförmigen Produkten nur noch die entsprechende Menge eingewogen werden muss. Kommerziell erhältliche Rußpräparate sind z.B. die Rußpasten Tack AC 15/200 (12 % Rußanteil), BB 40/25 (38 - 42 Gew.-% Rußanteil) der Degussa AG oder die Rußpaste ADDIPAST 750 DINP (20 - 30 % Rußanteil) der Brockhues GmbH.

Nachteilig an den Rußpräparaten ist jedoch, dass der organische Anteil möglicherweise nicht verträglich mit dem favorisierten Polyurethan-System (aus Polyisocyanat und Polyesterpolyol) ist. Bei dem Polyurethansystem Desmodur^{®} BL 3175 SN / Desmophen^{®} 680 BA treten z.B. bei Verwerdung der Rußpaste Tack AC Stippen auf. Ein weiterer Nachteil der Rußpräparate ist, dass der Rußanteil herstellungsbedingt von Charge zu Charge Schwankungen unterliegen kann - mit den bereits genannten Folgen für die Transmission der Beschichtung. Von Nachteil ist ferner, dass die Rußpräparate, wie z.B. das Rußpräparat Tack AC, Butylacetat oder andere leichtflüchtige Lösungsmittel enthalten können. Leichtflüchtige Lösungsmittel in der Farbe sollten aber vermieden werden, wenn die Beschichtung mit dem Siebdruckverfahren erfolgen soll, damit die Farbkonzentration während der Verarbeitung konstant bleibt (und sich nicht durch verdunstendes Lösungsmittel ändert). Denn die Veränderung der Farbkonzentration während des Siebdrucks bewirkt zwangsläufig Veränderungen der Viskosität, der Schichtdicke und damit letztendlich auch Veränderungen der Transmission der ausgehärteten Beschichtung. Bei den anderen beiden genannten Rußpräparaten ist nachteilig, dass als organische Dispergiermedien Weichmacher (Benzylbutylphthalat, BBP; Diisononylphthalat, DINP) verwendet werden, die gefährlich für die Umwelt und auch die menschliche Gesundheit sind.

Die beste Möglichkeit, den Ruß in definierter Konzentration und ausreichend fein in dem Polyurethansystem zu dispergieren, ohne die genannten Nachteile der Rußpasten in Kauf nehmen zu müssen, ist die Verwendung spezieller Granulate, in denen der Ruß in einer organischen, bei 20 °C festen Matrix dispergiert ist. Solche Rußpräparationen sind z.B. unter dem Namen INXEL™ der Degussa AG oder Surpass^{®} der Sun Chemical Corporation kommerziell erhältlich. Der Ruß ist in diesen Granulaten fein dispergiert in eine Kunststoffmatrix eingeschmolzen. Die Kunststoffmatrix kann, evtl. unter Zusatz von Benetzungsmitteln, durch Dispergieren mit dem Dissolver in gängigen Lösungsmitteln aufgelöst werden, so dass eine Rußpaste oder eine flüssige Rußdispersion hergestellt werden kann, die die freien Primärpartikel enthält und an die speziellen Erfordernisse der jeweiligen Anwendung (Lösungsmittel, Konzentration, Viskosität) angepaßt ist. Als Kunststoffmatrix für die Granulate werden normalerweise Aldehydharze (z.B. Laropal^{®} A 81 der BASF, ein Harnstoff-Aldehydharz) verwendet, die sehr gut verträglich mit Polyurethansystemen sind und in diese eingebaut werden können, wenn sie aciden Wasserstoff enthalten. Die Rußkonzentration in den Granulaten ist je nach Granulat unterschiedlich, sie liegt im Bereich von 20 - 60 Gew.-%, insbesondere 25 Gew.-% (INXEL™ Black A905) oder 55 Gew.-% (Surpass^{®} black 647-GP47).

Als Lösungsmittel für das pigmentierte Polyurethansystem eignen sich, um eine Siebdruckfarbe herzustellen, insbesondere aprotische, schwerflüchtige Lösungsmittel mit einer Verdunstungszahl VD von 35 bis über 50 und einem Siedepunkt von über 120 °C , insbesondere über 200 °C wie z.B. Butylcarbitolacetat (Butyldiglycolacetat), das eine Verdunstungszahl (VD) von über 3000 hat (VD_{Diethylether} = 1) und im Bereich von 235 - 250 °C siedet.

Auch mittelflüchtige, aprotische Lösungsmittel (VD = 10 - 35) mit einem Siedepunkt im Bereich von 120-200 °C wie z.B. (1-Methoxy-2-propyl)-acetat (VD = 34), Butylacetat (VD = 11) oder Xylol (VD = 17) sind geeignet. Die schweroder mittelflüchtigen, hochsiedenden Lösungsmittel, die auch miteinander kombiniert eingesetzt werden können, haben zum einen die Aufgabe, die Farbe im Sieb flüssig, d.h., verarbeitbar, zu halten. Zum anderen ist es wichtig, dass während der Verarbeitung die Konzentration der Farbe konstant bleibt, damit reproduzierbare Schichtdicken und daraus resultierend eine konstante Transmission der Beschichtung erreicht werden können. Eine konstante Konzentration der Farbe während des Verarbeitungsprozesses kann nur mit ausreichenden Anteilen an mittel- oder schwerflüchtigen Lösungsmitteln in der Farbe erreicht werden, weil leichtflüchtige Lösungsmittel (VD < 10) bereits während des Druckens der Farbe verdunsten und sich dadurch die Konzentration der Farbe unzulässig stark verändern würde.

Die Versuche zeigten aber auch, dass leichtflüchtige Lösungsmittel (VD 1 - 10), wie Methylacetat (VD = 2,2) oder Methylisobutylketon (VD = 7), in gewissen Mengen (1 - 10 Gew.-% bezogen auf die Farbe) enthalten sein dürfen, ohne dass durch die Verdunstung des Lösungsmittels und die damit verbundene Erhöhung der Konzentration während des Siebdruckprozesses unzulässig hohe Transmissionsänderungen auftreten. Der Anteil an leichtflüchtigen Lösungsmitteln darf insbesondere nicht höher sein als der Anteil an mittelflüchtigen und schwerflüchtigen Lösungsmitteln.

Aprotische Lösungsmittel sollten verwendet werden, weil die Isocyanatkomponente des Bindemittelsystems mit diesen Lösungsmitteln nicht reagiert. Bei der Wahl protischer Lösungsmittel, wie z.B. n-Butylalkohol (VD = 33), Methoxypropanol (VD = 38), Butylglycol (VD = 165), Butyldiglycol (VD > 1200), Phenoxypropanol oder Terpineolen würde die Isocyanatkomponente bei der thermischen Aushärtung auch mit dem Lösungsmittel reagieren, wodurch die Eigenschaften (chemische Beständigkeit, Haftfestigkeit u.a.) der Beschichtung normalerweise in unerwünschter Weise verändert werden. Die Reaktion einer Isocyanatkomponente mit n-Butylalkohol würde z.B. zu einem gering verzweigten Polyurethan mit geringer Kratzfestigkeit führen. In besonderen Fällen kann die Reaktion mit dem Lösungsmittel jedoch gewünscht sein. Die Reaktion der Isocyanatkomponente mit einem protischen Lösungsmittel kann in besonderen Fällen auch dadurch verhindert werden, dass ein protisches Lösungsmittel eingesetzt wird, das bei Temperaturerhöhung schnell aus dem gedruckten Film entweicht, so dass bei Erreichen der Deblockierungstemperatur kein oder nur noch vernachlässigbar wenig protisches Lösungsmittel in dem Film vorhanden ist.

Eine mit Ruß pigmentierte Siebdruckfarbe auf Basis des beschriebenen Polyurethansystems sollte insgesamt 10 - 45 Gew.-% Lösungsmittel, insbesondere 38 - 43 Gew.-% Lösungsmittel enthalten. Die Viskosität der Farbe liegt dann bei einer Schergeschwindigkeit von 200 s⁻¹ im Bereich von 500 - 3500 mPa·s, insbesondere 1000 - 3000 mPa·s, so dass die Farbe glatt fließt ohne zu tropfen und ein gleichmäßiger Film erhalten wird.

Wenn das Polyurethansystem mit anderen Pigmenten als Ruß versehen wird, kann der Lösungsmittelanteil deutlich höher oder niedriger liegen, je nach Feinheit der Pigmente, gewünschter Schichtdicke und Beschichtungsmethode. Der Lösungsmittelanteil sollte durch Reihenversuche bestimmt und auf die Beschichtungsmethode abgestimmt werden.

Wenn das pigmentierte Polyurethansystem zu flüssig für die Siebdruckanwendung ist und der Lösungsmittelanteil nicht weiter reduziert werden kann, muss die Viskosität durch Zusatz von rheologischen Additiven erhöht werden. Andernfalls würde die Farbe nach dem Fluten durch das Siebgewebe hindurchtropfen, und die Verarbeitung wäre unmöglich oder zumindest stark erschwert.

Geeignete rheologische Additive sind Verdickungs- und Thixotropiermittel, die idealerweise den Farbton, die Transmission und die Streuung der ausgehärteten Beschichtung nicht verändern sollten.

Die Verdickung kann z.B. erreicht werden durch Zusatz von Harzen wie bei 20 °C festen oder zähflüssigen Polyacrylaten, Polysiloxanen, thixotropierten Acrylharzen und isocyanat- oder urethanthixotropierten Alkydharzen. Auch Wachse wie hydriertes Rizinusöl oder Polyolefinwachse sind geeignet. Die für Siebdrucklacke gewünschte Strukturviskosität kann auch mit assoziativen Verdickern wie assoziativen Acrylatverdickern, hydrophob modifizierten Celluloseethern, hydrophob modifizierten Etherurethanen ("Polyuerthanverdickern"), hydrophob modifizierten Polyethern oder modifizierten Harnstoffen erreicht werden.

Bei den genannten organischen oder organisch modifizierten Verdickern muss auf jeden Fall die Verträglichkeit mit dem System und die Vergilbungsneigung bei thermischer Belastung bewertet werden. So können Celluloseether in bestimmten Konzentrationsbereichen auch den gegenteiligen Effekt haben und die Viskosität weiter verringern. Hydriertes Rizinusöl kann wegen seiner vergleichsweise geringen thermischen Stabilität bei der thermischen Vernetzung des Polyurethansystems zu einer unerwünschten Braunfärbung durch Zersetzungsprodukte führen. Das Problem der Vergilbung oder Braunfärbung des Polyurethansystems bei der thermischen Vernetzung tritt bei rein anorganischen Verdickungsmitteln nicht auf, da diese normalerweise hohe thermische Stabilität besitzen.

Geeignete anorganische oder organisch modifizierte anorganische Verdickungsmittel sind z.B. amorphe Kieselsäuren oder - bei polaren Lösungsmitteln wie Methoxypropylacetat oder Butylcarbitolacetat - insbesondere hydrophile, pyrogene Kieselsäuren. Aber auch organisch modifizierte, hydrophobe Kieselsäure oder Organoschichtsilicate (organisch modifizierte Bentonite, Smektite, Attapulgite) sowie Metallseifen, z.B. Zink- oder Aluminiumstearate und -octoate sind zur Viskositätserhöhung geeignet.

Nachteilig bei den anorganischen Verdickern ist, dass sie die Streuung der Beschichtung erhöhen können und damit die Transparenz der Beschichtung erniedrigen. Durch den Zusatz von pyrogenen Kieselsäuren nimmt die Streuung der Beschichtung jedoch überraschender Weise selbst bei relativ hohen Anteilen (10 - 15 Gew.-% in der vernetzten Beschichtung) nicht besonders stark zu. Der Anteil anorganischer Verdickungsmittel (bezogen auf die vernetzte Schicht) sollte im Bereich von 0,1 - 25 Gew.-%, insbesondere im Bereich von 3 - 15 Gew.-%, liegen. Bei einem höheren Anteil als 25 Gew.-% Verdickungsmittel können auch andere Schichteigenschaften (thermische und mechanische Stabilität) deutlich beeinträchtigt werden. (Der Anteil in Gew.-% bezieht sich auf die ausgehärtete Beschichtung).

Um das Druckbild zu optimieren, insbesondere der Bildung von Kratern und Benardschen Zellen entgegenzuwirken, eine gute Benetzung sowie Bildung eines glatten, gleichmäßigen Films sicherzustellen, sollten der Druckfarbe ferner Entschäumer, Netz- oder Verlaufsmittel zugesetzt werden (z.B. 0,1 - 2 Gew.-% Polysiloxan mit einer Viskosität von 5000 - 50000 mPa·s). Denn die Ausbildung eines gleichmäßigen, glatten Films ist von entscheidender Bedeutung für die Anzeigequalität, weil das Licht von unebenen Schichten mit unregelmäßig verteilten Pigmentteilchen abgelenkt wird und das Leuchtmittel trotz feinster Pigmente nicht klar erkennbar wäre.

Die fertige Polyurethanfarbe kann druckfiltriert werden, um aus den Rohstoffen oder im Herstellungsprozess eingetragene Fussel, Staub oder andere Partikel, evtl. auch vereinzelt noch vorhandene (Ruß-)Agglomerate, zu entfernen.

Die Beschichtung von Anzeigebereichen transparenter Materialien, z.B. Kunststoff-, Glas- oder Glaskeramikplatten, insbesondere von Anzeigebereichen in Kochflächen oder Bedienblenden, kann durch Sprühen, Tauchen, Gießen, Aufstreichen, Siebdruck, Tampondruck oder andere Stempelverfahren erfolgen. Die Beschichtung kann ein- oder mehrlagig erfolgen, beispielsweise um Farbunterschiede, Farbabstufungen oder andere Farbeffekte sowie Transmissionsunterschiede zu erzeugen. Bauteile, die im Gebrauch thermisch nicht über 150 °C belastet werden (z.B. Bedienblenden, Autoscheiben oder Armaturen), können auch vollflächig beschichtet werden. Bei einem mehrlagigen Schichtaufbau, aus gleich oder unterschiedlich gefärbten Polyurethanlacken der beschriebenen Zusammensetzung, können einzelne Bereiche unbeschichtet bleiben, wodurch verschieden farbige oder verschieden transparente Bereiche, einschließlich opaker Bereiche mit einer Transmission unter 1 % erzeugt werden können.

Bauteile, die im Gebrauch thermisch nicht über 150 °C und mechanisch nur mäßig belastet werden (wie z.B. Armaturen von Autos, Bedienblenden von Kühlschränken, Waschmaschinen oder Geschirrspülern), können auch auf der Seite, die dem Benutzer zugewandt ist, beschichtet werden. Denn mit dem beschriebenen Polyurethansystem können Beschichtungen mit hoher Kratzfestigkeit erzeugt werden.

Das Siebdruckverfahren bietet den Vorteil, dass über die Gewebestärke die Dicke der Displaybeschichtung genau definiert werden kann, so dass im Fertigungsprozess mit hoher Genauigkeit konstante Schichtdicken auch über weite, flächige Bereiche erzeugt werden können. Dieser Aspekt ist wie bereits erwähnt bei Displayschichten von besonderer Bedeutung, weil dadurch die Transmission für das Licht der Leuchtelemente definiert einstellbar ist und über den gesamten Anzeigebereich konstant bleibt.

Geeignete Gewebestärken sind 54-64, 100-40 und 140-31. Bei Anwendungen, die eine hohe Kantenschärfe erfordern, können feine Gewebe verwendet werden (z.B. Gewebe 100-40 mit einer Maschenweite von 57 µm oder Gewebe 140-31 mit einer Maschenweite von 36 µm). Mit diesen Geweben werden normalerweise Schichtdicken im Bereich von 1 - 10 µm erhalten. Relativ grobes Gewebe, z.B. Gewebe 54-64 (mit einer Maschenweite von 115 µm), hat den Vorteil, dass auch noch relativ große Pigmentpartikel (z.B. Effektpigmente, plättchenförmige Perlglanzpigmente mit Kantenlängen von bis zu 100 µm etc.) eingesetzt werden können, ohne dass sich beim Drucken die Gewebemaschen zusetzen. Werden elektrisch leitfähige Pigmente (z. B. Ruß in der bereits weiter oben genannten Menge) verwendet, können mit Gewebe 54-64 (oder gröberem Gewebe) ausreichend dicke und damit ausreichend opake Displayschichten erhalten werden, die aufgrund der hervorragend isolierenden Eigenschaften des Polyurethan-Bindemittelsystems elektrisch nicht leitfähig sind, so dass unterhalb der Displaybeschichtung kapazitive Berührungsschalter eingesetzt werden können. Bei feineren Gewebestärken, die dünnere Schichten ergeben, wären, um eine ausreichend opake Beschichtung zu erhalten, höhere Pigmentanteile nötig, wodurch die Leitfähigkeit der Beschichtung für die Anwendung von kapazitiven Berührungsschaltern unzulässig hoch werden kann.

Mit dem Siebdruckverfahren ist für den gezielten Auftrag der Farbe in unbeschichtete Bereiche einer beidseitig glatten, in den übrigen Bereichen opak beschichteten Platte auch keine aufwendige Maskierungstechnologie notwendig (wie etwa bei Sprüh- oder Gasphasenabscheidungsverfahren). Selbst wenn die (opake) Beschichtung des Bereichs um den Anzeigebereich herum sehr dick ist (bis zu 60 µm), so dass die Displayschicht in eine Vertiefung gedruckt werden muss, treten trotz der zu überwindenden Stufe keine Probleme bei der Beschichtung des ausgesparten Anzeigebereichs auf.

Insbesondere, wenn die Displayschicht etwa 1 - 5 mm überlappend auf die Beschichtung im übrigen Bereich gedruckt wird, treten keine unbenetzten Stellen an den Rändern auf, also an den Kanten, wo die Beschichtung des umgebenden Bereichs endet.

Der überlappende Druck der Displayschicht auf die Beschichtung des umgebenden Bereichs ist vorteilhaft. Denn aufgrund vorhandener Fertigungstoleranzen beträgt die Genauigkeit, mit der die Ausrichtung der Schablone zum Druck der Displayschicht relativ zu allen anderen bereits gedruckten Schichten (einschließlich Oberseitendekor) erfolgt, üblicherweise 0,3 - 1,0 mm. Ohne Überlappung mit der umgebenden Unterseitenbeschichtung könnten daher aufgrund der Fertigungstoleranzen durch den Versatz der Schablone Bereiche des Displayfensters unbeschichtet bleiben. Wenn jedoch eine ausreichend große Überlappung der Displayschicht mit der umgebenden Beschichtung vorgesehen ist, kann sichergestellt werden, dass der gesamte Anzeigebereich stets vollständig von der Displayschicht ausgefüllt wird.

Eine wichtige Voraussetzung in diesem Zusammenhang ist, dass die Displayschicht auf der umgebenden Beschichtung ausreichend haftet. Bei Displayschichten auf der Basis des beschriebenen Polyurethansystems zeigte sich, dass ein guter Verbund erreicht wird mit Alkylsilicatschichten, insbesondere der in DE 103 55 160 B4 und DE 10 2005 018 246 A1 genannten Systeme, mit Edelmetallbeschichtungen, insbesondere der in DE 10 2005 046 570 B4 und DE 10 2008 020 895 B4 genannten Systeme, mit gesputterten Systemen (DE 10 2007 030 503 B4), mit porösen Beschichtungen auf Basis von Glas (EP 1 435 759 A2) oder vernetzten Siliconbeschichtungen (DE 10 2008 058 318 B3). Benetzungs- und Haftungsprobleme treten dagegen auf, wenn die umgebende Schicht als Filmbildner überwiegend (mehr als 50 Gew.-% bezogen auf die ausgehärtete Schicht) unvernetzte Silicone (Polysiloxane) enthält oder stark hydrophob ist. In diesem Fall kann das Polyurethansystem jedoch durch Zusatz von Siliconharzen (z.B. Methyl- oder Phenylsiliconharzen) oder anderen Harzen entsprechend modifiziert werden.

Die thermische Aushärtung des aufgebrachten Polyurethansystems erfolgt durch Erhitzen auf 100 °C - 250 °C, insbesondere durch Erhitzen auf 160 - 200 °C für eine Dauer von 1 - 60 min, insbesondere von 30 - 45 min. Durch das Erhitzen verdunstet zum einen das Lösungsmittel aus der Farbe, zum anderen wird die Isocyanatkomponente deblockiert, so dass die Vernetzungsreaktion mit der H-aciden Komponente (z.B. Polyesterpolyol) abläuft und sich ein fester Film bildet. Höhere Temperaturen als 200 °C werden normalerweise nicht angewandt, weil das gebildete Polyurethan ab 200 °C beginnt, sich zu zersetzen. Die Zersetzung bewirkt eine leichte Braunfärbung der Beschichtung, die in der Regel unerwünscht ist. In besonderen Fällen kann aber auch bei einer höheren Temperatur als 250 °C und extrem kurzer Dauer (1 - 5 min) vernetzt werden. Durch die kurze Temperaturbelastung hält sich dann die Braunfärbung in Grenzen.

Die erforderliche Reaktionstemperatur hängt u.a. ganz wesentlich von dem Blockierungsmittel, mit dem die Isocyanatkomponente blockiert ist, ab. So genügen bei Isocyanaten, die mit Butanonoxim blockiert sind, 140 - 180 °C, um die Vernetzung in Gang zu setzen, während bei Isocyanaten, die mit ε-Caprolactam blockiert sind, 160 - 240 °C notwendig sind. Die notwendige Dauer für eine ausreichende Vernetzung hängt von der Auswahl der IsocyanatKomponente und der H-aciden Verbindung (Polyesterpolyol) ab. Sie kann wesentlich (auf wenige Minuten) durch Katalysatoren verkürzt werden, z.B. durch tertiäre Amine, insbesondere aber durch metallhaltige Katalysatoren, z.B. Zn-, Co-, Fe-, Sn(IV)-, Sb- und Sn(II)-Salze. Besonders geeignete Katalysatoren sind Zinn(IV)-Alkoxylate wie z.B. Dibutylzinndilaurat und Tetra-(2-ethylhexyl)-titanat, Zink- oder Cobaltnaphthenat. Der Katalysator oder die Katalysatormischung werden in einer Menge von 0,05 - 1 Gew.-% (bezogen auf die Farbpaste) zugesetzt.

Aufgrund der niedrigen Vernetzungstemperatur des Polyurethansystems sind als Substrate nicht nur transparente Glaskeramiken, sondern auch transparente Gläser (z.B. Borosilicatglas, Kalk-Natron-Glas, Alumosilicat-Glas, Erdalkali-Silicat-Glas), die gewalzt oder gefloatet und thermisch oder chemisch vorgespannt sein können (wie z.B. in EP 1 414 762 B1 beschrieben) oder transparente Kunststoffe geeignet.

Die unbeschichteten Substrate können auch leicht getönt sein (z.B. braun, rot oder auch blau), müssen aber ausreichend transparent für Leuchtanzeigen bleiben (1 % ≤ τᵥᵢₛ ≤ 100 %), d.h., sie dürfen nicht undurchlässig für Licht sein.

Die Substrate müssen nicht unbedingt ebene Platten sein, sondern können auch abgewinkelt oder gewölbt oder auf andere Art verformt sein.

Für Kochflächen werden bevorzugt Glaskeramiken vom Typ Li₂O-Al₂O-SiO₂ verwendet, insbesondere transparente, nicht eingefärbte Glaskeramik mit einer thermischen Ausdehnung von -10 · 10⁻⁷ K⁻¹ bis +30 · 10⁻⁷ K⁻¹ in dem Temperaturbereich 30 - 500 °C, deren bekannte Zusammensetzung u.a. in der nachstehenden Tabelle 3 angegeben ist:

**Tab. 3 Zusammensetzung geeigneter Glaskeramik-Substrate**

| Elementoxid | Glaskeramik-Zusammensetzung [Gew.-%] | | |
|---|---|---|---|
| SiO₂ | 66 - 70 | 50 - 80 | 55 - 69 |
| Al₂O₃ | > 19,8 - 23 | 12 - 30 | 19 - 25 |
| Li₂O | 3 - 4 | 1 - 6 | 3 - 4,5 |
| MgO | 0 - 1,5 | 0 - 5 | 0 - 2,0 |
| ZnO | 1 - 2,2 | 0 - 5 | 0 - 2,5 |
| BaO | 0 - 2,5 | 0 - 8 | 0 - 2,5 |
| Na₂O | 0 - 1 | 0 - 5 | 0 - 1,5 |
| K₂O | 0 - 0,6 | 0 - 5 | 0 - 1,5 |
| TiO₂ | 2 - 3 | 0 - 8 | 1 - 3 |
| ZrO₂ | 0,5 - 2 | 0 - 7 | 1 - 2,5 |
| P₂O₅ | 0 - 1 | 0 - 7 | - |
| Sb₂O₃ | - | 0 - 4 | - |
| As₂O₃ | - | 0 - 2 | - |
| CaO | 0 - 0,5 | 0 | 0 - 1,5 |
| SrO | 0 - 1 | 0 | 0 - 1,5 |
| Nd₂O₃ | - | - | 0,004 - 0,4 |
| B₂O₃ | - | - | 0 - 1 |
| SnO₂ | - | - | 0-0,4 |
| Quelle | EP 1 170 264 B1 Ansprüche 14-18 | JP 2004-193050 A2 | EP 1 837 314 B1 |

Die Glaskeramiken enthalten mindestens eines der folgenden Läutermittel: As₂O₃, Sb₂O₃, SnO₂, CeO₂, Sulfat- oder Chlorid-Verbindungen.

In einem ersten Ausführungsbeispiel wird von einer beidseitig glatten, farblosen Glaskeramikplatte (1), die ca. 60 cm breit, 80 cm lang und 4 mm dick ist, mit der Zusammensetzung gemäß EP 1 837 314 B1 (Tab.3) ausgegangen, die oberseitig mit einer keramischen Dekorfarbe (6) gemäß DE 197 21 737 C1 in einem Punktraster, das im Anzeigebereich (3) ausgespart wurde, beschichtet und keramisiert wurde.

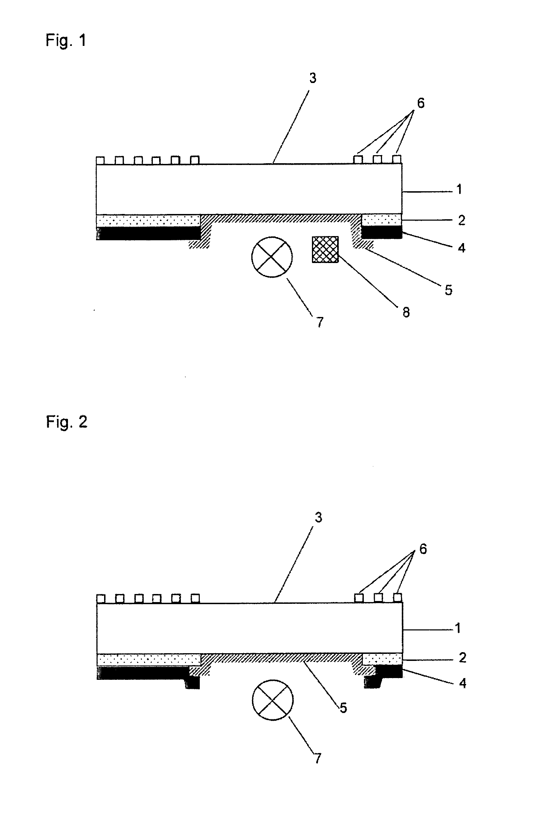

Wie in Fig.1 gezeigt, wurde anschließend auf die Unterseite der keramisierten Glaskeramikplatte (1) eine erste, farbgebende und blickdichte Farblage (2) aus einer Sol-Gel-Farbe durch Siebdruck vollflächig, jedoch unter Aussparung des Anzeigebereichs, aufgebracht.

Die farbgebende Beschichtung (2) wurde bei 100 °C 1 Std. getrocknet und bei 350 °C 8 Std. eingebrannt. Anschließend wurde eine weitere Sol-Gel-Farbe (4) als zweite Farblage (Deckschicht) auf die erste Farblage (2) gedruckt und bei 150 °C 30 min getrocknet, um Eigenschaften wie eine hohe Kratzfestigkeit sowie Dichtigkeit gegenüber Wasser und Öl zu erreichen. Einzelheiten über die unterseitige Beschichtung von Glaskeramik-Kochflächen mit farbgebenden, blickdichten Sol-Gel-Schichten können DE 103 55 160 B4 entnommen werden.

In den ausgesparten Anzeigebereich (3) wurde nun die Polyurethanfarbe mit der Zusammensetzung (A), Tabelle 4, durch Siebdruck (Siebgewebe 54 - 64) aufgetragen, wobei die erhaltene Displayschicht (5) etwa 1 mm mit der umgebenden Beschichtung überlappt. Anstelle der Farbe mit Zusammensetzung (A) können auch die anderen beispielhaften Zusammensetzungen (B) bis (I) aufgetragen werden. Die Zusammensetzungen (A) bis (D) unterscheiden sich nur in der Auswahl der Polyurethan-Komponenten. Bei den Zusammensetzungen (E) und (F) wurde das stöchiometrische Verhältnis von Härter zu Binder variiert. Es beträgt bei Zusammensetzung (E) 1,3 : 1 und bei Zusammensetzung (F) 1,6 : 1. Die Zusammensetzung (G) enthält anstelle von feinteiligem Ruß gröbere Pigmente, wie sie derzeit in Displayschichten von Kochflächen, die im Markt sind, eingesetzt werden. Die Zusammensetzungen (H) und (I) enthalten kein Pigment, sondern einen hochwertigen, organischen Metallkomplex-Farbstoff, der in dem Polyurethansystem aufgelöst wurde. Die Polyurethanfarben wurden 45 min bei 160 °C, 200 °C oder 240 °C vernetzt (s. Tabelle 6).

Die in den Polyurethanfarben der Zusammensetzung (A) bis (F) eingesetzte Rußpaste wurde hergestellt, indem 177 g Butylcarbitolacetat, 37 g Dispergiermittel Schwego Wett 6246 (Polymere in Kombination mit Phosphorsäureestern) und 164 g Surpass^{®} black 7 (Sun Chemical Corporation, 55 Gew.-% Ruß in 45 Gew.-% Laropal^{®} A 81) mit dem Dissolver 20 min bei einer Umfangsgeschwindigkeit von 13,1 - 15,7 m/s homogenisiert wurden. Die Umfangsgeschwindigkeit sollte mindestens 12 m/s betragen, damit der Ruß ausreichend fein dispergiert wird.

**Tab.4a: Zusammensetzung der Druckfarben**

| Farbkomponente | Zusammensetzung in Gew.-% | | | | | | | | |
|---|---|---|---|---|---|---|---|---|---|
| | A | B | C | D | E | F | G | H | I |
| Desmodur BL 3175 SN (75%ig in Solventnaphtha 100) | 37,79 | 23,09 | 34,32 | - | 42,56 | 46,21 | 32,52 | 38,94 | - |
| Desmodur BL 3272 MPA (72%ig in Methoxypropylacetat) | - | - | - | 40,11 | - | - | - | - | 42,21 |
| Desmophen 651 (65 %ig in Methoxypropylacetat) | 35,75 | - | - | 33,43 | 30,98 | 27,33 | 30,78 | 36,84 | 27,07 |
| Desmophen 670 (60 %ig in Butylcarbitolacetat) | - | - | 44,83 | - | - | - | - | - | - |
| Desmophen 680 (70 %ig in Butylacetat) | - | 50,45 | - | - | - | - | - | - | - |
| Rußpaste (enthält 3,92 g Butylcarbitolacetat) | 8,38 | 8,38 | 8,38 | 8,38 | 8,38 | 8,38 | - | - | - |
| Perlglanzpigment Iriodin^{®} 111 Rutil Feinsatin (TiO₂/SnO₂ gecoateter Glimmer, Merck KGaA) | - | - | - | - | - | - | 10,30 | - | - |
| Perlglanzpigment Iriodin^{®} 305 Solar Gold (Ti/Fe/Si/Sn-Oxid gecoateter Glimmer, Merck KGaA) | - | - | - | - | - | - | 0,90 | - | - |
| Graphit Timrex^{®} SFG15 (D90 = 15 - 20 µm) | - | - | - | - | - | - | 3,50 | - | - |
| Chromkomplexfarbstoff ORASOL^{®} Black RLI (BASF SE) | - | - | - | - | - | - | - | 2,22 | 2,22 |
| Butylcarbitolacetat | 16,08 | 16,08 | 10,47 | 16,08 | 16,08 | 16,08 | 20,00 | 20,00 | 20,00 |
| Verdicker Byk-410 (modifizierter Harnstoff) | 1,50 | 1,50 | 1,50 | 1,50 | 1,50 | 1,50 | 1,50 | 1,50 | - |
| Verdicker pyrogene Kieselsäure HDK-N20 (Wacker) | - | - | - | - | - | - | - | - | 8,00 |
| Entschäumer Byk-054 (Polymer-Lsg., siliconfrei) | 0,50 | 0,50 | 0,50 | 0,50 | 0,50 | 0,50 | 0,50 | 0,50 | 0,50 |

**Tab.4b: Zusammensetzung der ausgehärteten Schichten**

| Schicht-Komponente | Zusammensetzung in Gew.-% | | | | | | | | |
|---|---|---|---|---|---|---|---|---|---|
| | A | B | C | D | E | F | G | H | I |
| Polyurethan | 93,4 | 93,6 | 93,5 | 93,3 | 93,5 | 93,5 | 75,2 | 96,0 | 82,5 |
| Laropal^{®} A 81 | 3,0 | 2,8 | 2,9 | 3,0 | 2,9 | 2,9 | - | - | - |
| Ruß | 3,6 | 3,6 | 3,6 | 3,7 | 3,6 | 3,6 | - | - | - |
| Iriodin^{®} 111 | - | - | - | - | - | - | 17,4 | - | - |
| Iriodin^{®} 305 | - | - | - | - | - | - | 1,5 | - | - |
| Timrex^{®} SFG15 | - | - | - | - | - | - | 5,9 | - | - |
| ORASOL^{®} Black RLI | - | - | - | - | - | - | - | 4,0 | 3,8 |
| HDK-N20 | - | - | - | - | - | - | - | - | 13,7 |

**Tab.5: Farbstabilität der Displayschichten**

| Eigenschaft | | Thermische Belastung | | | | | | | | |
|---|---|---|---|---|---|---|---|---|---|---|
| | | A | | | D | | | H | | |
| | | keine | 12 h 150 °C | 45 min 200 °C | keine | 12 h 150 °C | 45 min 200 °C | keine | 12 h 150 °C | 45 min 200 °C |
| Farbwerte (Weißkachel) | L* | 26,54 | 26,73 | 26,47 | 26,51 | 26,88 | 26,24 | 24,72 | 24,87 | 25,03 |
| | a* | 0,03 | 0,07 | -0,05 | 0,09 | 0,09 | 0,11 | 1,39 | 1,40 | 1,47 |
| | b* | -0,28 | -0,13 | 0,09 | -0,60 | -0,46 | -0,58 | -1,60 | -1,67 | -1,87 |
| Farbunterschied | ΔE | - | 0,2 | 0,4 | - | 0,4 | 0,3 | - | 0,2 | 0,4 |

In einer weiteren Ausführungsform kann die Reihenfolge, in der die Displayschicht (5) und die Deckschicht (4) aufgetragen werden, auch umgekehrt werden: Die Displayschicht (5) wird dann nach dem Einbrand der farbgebenden Schicht (2) im Anzeigebereich (3) aufgebracht und die Deckschicht (4), mit Aussparung im Anzeigebereich, auf die getrocknete Displayschicht (5), wie in Fig.2 gezeigt. Bei dieser Variante ist es wichtig, dass die Deckschicht (4) keine höhere Trocknungs- oder Einbrandtemperatur als 250 °C erfordert, da sich die Displayschicht auf Polyurethanbasis bei höheren Temperaturen als 250 °C merklich (unter Rauchbildung) zersetzt.

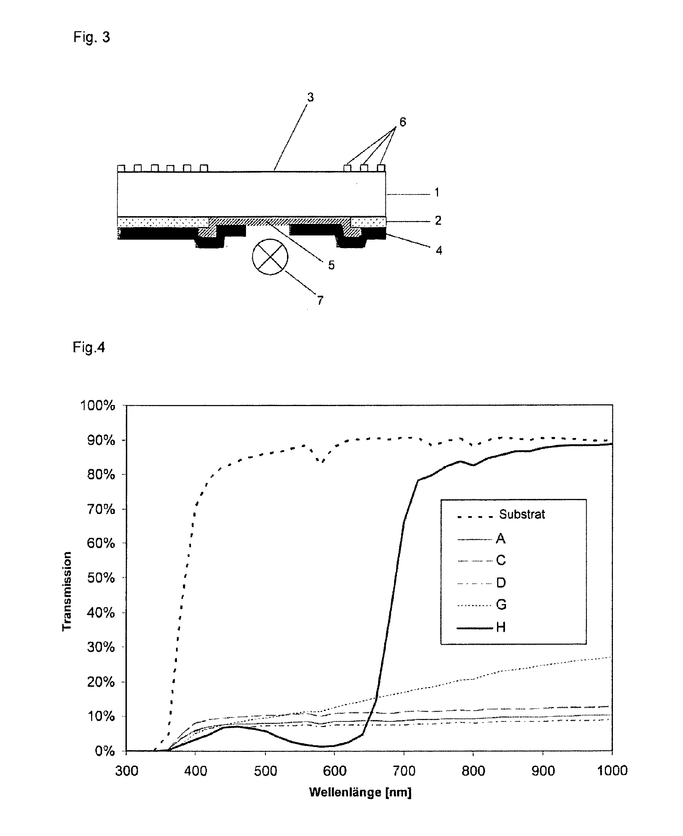

Eine Weiterentwicklung dieser Ausführungsform ist in Fig.3 dargestellt, in der die Deckschicht (4) bis in den Anzeigebereich (3) hineinreicht und lediglich einzelne, kleine Bereiche, z.B. unmittelbar über den Leuchtmitteln (7), frei bleiben. Der Vorteil dieser Ausführungsform ist, dass selbst bei extrem starker Beleuchtung des Kochfeldes (z.B. durch Halogenstrahler moderner Dunstabzugshauben) im Anzeigebereich (3) nicht in die Kochmulde gesehen werden kann, weil die Deckschicht (4) die Transmission - mit Ausnahme bestimmter Bereiche (z.B. direkt über LEDs) - auf unter 2 % erniedrigt.

Dadurch, dass die Displayschicht in einem separaten (zweiten oder dritten) Druckschritt in den vorgesehenen, ausgesparten Bereich aufgetragen wird, kann der Farbton der Displayschicht unabhängig von der umgebenden, farbgebenden Schicht gewählt werden.

Die Schichtdicke der farbgebenden Sol-Gel-Schicht und der Sol-Gel-Deckschicht beträgt in diesem Beispiel insgesamt 35,4 ± 3,0 µm. Die Schichtdicke der Displayschicht mit Zusammensetzung (A) beträgt 10,3 ± 0,1 µm. Die Schichtdicken der anderen Zusammensetzungen (B) bis (I) liegen in derselben Größenordnung, weil alle beispielhaften Zusammensetzungen mit Siebgewebe 54-64 gedruckt wurden und der Feststoffanteil der Zusammensetzungen (A) bis (I) vergleichbar ist (54 - 60 Gew.-%). Die Displayschichten konnten problemlos, d.h. ohne unbedruckte Bereiche an den Kanten, in den ausgesparten Bereich gedruckt werden.

Die Transmission im Bereich des sichtbaren Lichts, τᵥᵢₛ, liegt für die Displayschicht gemäß Zusammensetzung (A) bei 8,2 %. Die Transmission der übrigen, rußpigmentierten Schichten liegt in derselben Größenordnung (7,3-10,6 %), da der vorgegebene Rußgehalt bei den rußpigmentierten Varianten (A) - (F) konstant 3,6 % beträgt und die Farben mit demselben Siebgewebe (54-64) gedruckt wurden. Die Transmissionsunterschiede zwischen den erhaltenen Displayschichten beruhen auf Schwankungen bei der Farbherstellung und dem Drucken der Beschichtung. Insgesamt kann aus den relativ geringen Transmissionsunterschieden auf eine hohe Reproduziergenauigkeit im Fertigungsprozeß geschlossen werden.
Fig.4 zeigt die Transmissionkurve der unbeschichteten und der im Anzeigebereich mit Zusammensetzung (A) beschichteten Glaskeramik. Die Transmission τᵥᵢₛ wurde aus dem Transmissionsverlauf gemäß DIN EN 410 für Normlichtart D65, 2° Beobachter, berechnet. Auffallend ist, dass die Transmission der mit Beschichtung (A) versehenen Glaskeramik im gesamten Wellenlängenbereich des sichtbaren Lichts (400 - 750 nm) nahezu konstant ist. Die Änderung beträgt nur 3,1 %. Vergleichbares gilt für die anderen rußpigmentierten Zusammensetzungen (B) bis (F). Die rußpigmentierten Polyurethanschichten unterscheiden sich daher von allen anderen, bisher bekannten Displaybeschichtungen durch ihre nahezu unveränderte Transparenz über den gesamten Wellenlängenbereich des sichtbaren Lichts.

Beispielsweise beträgt die Transmission der in DE 10 2006 027 739 B4 offenbarten Edelmetallbeschichtung für violettes Licht (400 nm) 2,8 % und für dunkelrotes Licht (750 nm) 13,5 %. Der Transmissionsunterschied zwischen beiden Lichtarten beträgt somit 10,7 % und ist damit mehr als dreimal so groß wie der Transmissionsunterschied bei rußpigmentierten Polyurethanschichten. Andere im Markt befindliche Edelmetallschichten weisen noch größere Transmissionsunterschiede auf. Auch Displayschichten auf Sol-Gel-Basis (z.B. gemäß
DE 10 2009 010 952) weisen relativ große Transmissionsunterschiede zwischen violettem und dunkelrotem Licht von 11 % und sogar bis zu 20 % auf.

Die rußpigmentierten Polyurethan-Displayschichten sind daher um ein Vielfaches besser für mehrfarbige Anzeigen geeignet als die im Markt befindlichen Displaybeschichtungen, weil die rußpigmentierten Polyurethanschichten im gesamten sichtbaren Spektrum bislang unerreicht gleichmäßig transparent sind und daher z.B. blaue, grüne, gelbe, weiße, rote LEDs oder andere Leuchtmittel gleich hell hindurchstrahlen lassen. Dieser Effekt ist erwünscht, weil der Markt momentan nach Kochflächen mit Displaybereichen verlangt, die sowohl für rotes, als auch für blaues Licht gleichermaßen ausreichend transparent sind.

Die Streuung der Displayschicht mit Zusammensetzung (A), die mit demselben Verfahren wie in DE 10 2006 027 739 B4 bestimmt wurde, liegt im Bereich des sichtbaren Lichts bei 3,7 - 5,1 %. Die Streuung der rußpigmentierten Schicht ist also größer als bei den Edelmetallschichten gemäß DE 10 2006 027 739 B4, aber deutlich kleiner als bei den im Markt befindlichen Silicon- und Sol-Gel-Displayschichten (s. DE 10 2009 010 952 und Vergleichsbeispiele in DE 10 2006 027 739 B4).

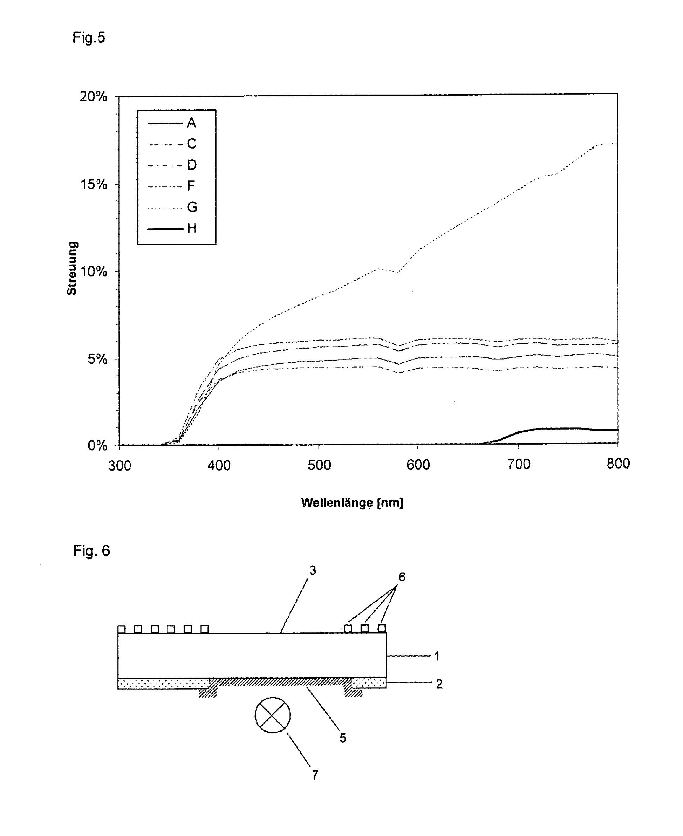

Fig.5 zeigt den Verlauf der Streuung der Glaskeramik, die mit den Displayschichten der Zusammensetzung (A), (C), (D), (F) bis (H) beschichtet ist, im relevanten Wellenlängenbereich von 400 - 750 nm. Der Übersicht halber wurden die Streuungskurven der Zusammensetzungen (B), (E) und (I) nicht dargestellt; die die Streuungskurven der Zusammensetzungen (B) und (E) verlaufen zwischen den Kurven (D) und (F), die Streuungskurve der Zusammensetzung (I) verläuft nahezu deckungsgleich mit Kurve (H). Die Streuung des sichtbaren Lichts durch die unbeschichtete Glaskeramik ist vernachlässigbar klein, u.a. weil die Rauheit der unbeschichteten, transparenten Glaskeramik nur Rₐ = 0,004 ± 0,001 µm beträgt. Die Rauheit der rußpigmentierten Polyurethanschichten (A) bis (F) liegt im Bereich 0,01 - 0,02 µm. Die geringe Rauheit der Glaskeramik und der Schichten (A) bis (F) sowie (H) und (I) ist die Voraussetzung für die geringe Streuung und die damit verbundene hohe Anzeigequalität, die an die der Edelmetallschichten heranreicht. In Fig.5 ist auch die Streuung der Polyurethanschicht mit Zusammensetzung (G), die relativ grobe Pigmente enthält, dargestellt. Die Beschichtung (G) ist mit Rₐ = 0,43 ± 0,08 µm deutlich rauher und streut das Licht stark. Entsprechend mäßig ist die Anzeigequalität. Die Pigmentierung der Beschichtung (G) entspricht der Pigmentierung von Ausführungsbeispiel (B) in DE 10 2009 010 952 (Verhältnis Iriodin-Anteil zu Graphit-Anteil = 3,2 : 1). Beide Schichten haben daher einen vergleichbaren Farbton, eine vergleichbare Transmission und Streuung. Im Gegensatz zu Ausführungsbeispiel (B) in DE 10 2009 010 952, mit dem eine Kratzfestigkeit von 200 g erreicht wird, ist die Polyurethan-Beschichtung (G) jedoch deutlich kratzfester (die Kratzfestigkeit liegt bei 800 g).

Die Streuung der Varianten (H) und (I) ist extrem gering, weil zur Einfärbung ein löslicher, organischer Farbstoff verwendet wurde. Weil in der Zusammensetzung (H) keine Feststoffpartikel vorhanden sind und der Lack gleichmäßig verläuft, liegt die Rauheit der ausgehärteten Beschichtung (H) in derselben Größenordnung wie die Rauheit der unbeschichteten Glaskeramik-Oberfläche. Die Anzeigequalität der Beschichtungen (H) und (I) ist excellent (sehr klare Anzeige von blauen, grünen, weißen oder roten LEDs) und steht der Qualität von Edelmetallschichten in nichts nach.

Die Rauheit wurde gemäß DIN EN ISO 4288 mit einem Tastschnittprofilometer bestimmt. Die Standardabweichung wurde aus drei repräsentativen Messungen berechnet. (Einzelmeßstrecke λc = 0,08 mm, Meßstrecke An = 0,40 mm, insgesamt 0,48 mm Gesamtscanlänge [Meßstrecke einschließlich Vor- und Nachlauf von je ½ λc]; bei Ausführungsbeispiel (G) betrugen λc = 0,80 mm, An = 4,0 mm und die Gesamtscanlänge 4,8 mm).

Die fertig beschichtete Kochfläche wurde in eine Kochmulde eingebaut und unter praxisrelevanten Bedingungen (bei Beleuchtung unter gängigen Dunstabzugshauben) geprüft, ob die eingeschaltete Leuchtanzeige (7-SegmentAnzeige eines Touch Control-Bedienfeldes von E.G.O.) ausreichend erkennbar ist. Da die derzeit üblichen Leuchtelemente der Anzeige aus einem Abstand von 60 - 80 cm deutlich erkennbar sind (d.h., scharf und hell genug durch die beschichtete Glaskeramik hindurchscheinen), ist die Transmission der Displayschichten (A) bis (I) ausreichend. Bei ausgeschalteter Leuchtanzeige wurde unter denselben Beleuchtungsbedingungen geprüft, ob durch die Displayschichten hindurch das Touch Control-Bedienfeld erkannt werden kann. Da das Bedienfeld im ausgeschalteten Zustand nicht erkennbar war, schränken die Displayschichten die Sicht in die Kochmulde ausreichend stark ein.

Da die Displayschichten keine Edelmetalle enthalten, sind sie deutlich preisgünstiger als Beschichtungen auf Basis von Edelmetallpräparaten.

Die Kratzfestigkeit der Beschichtungen (A) bis (I) beträgt mindestens 300 g und reicht bis über 1000 g. Die Kratzfestigkeit der Polyurethanschichten liegt damit um ein Vielfaches höher als bei herkömmlichen Displayschichten mit Siliconharzen als Filmbildner, die nicht einmal einer Belastung von 100 g standhalten. Die Kratzfestigkeit der Polyurethanschichten ist etwa doppelt bis dreifach so hoch wie bei Displayschichten auf Sol-Gel-Basis (DE 10 2009 010 952) und liegt in derselben Größenordnung wie die Kratzfestigkeit von Edelmetallschichten (DE 10 2006 027 739 B4).

Die Messung der Kratzfestigkeit wurde durchgeführt, indem die mit dem jeweiligen Gewicht (100 g, 200 g, ..., 800 g, 900 g, 1000 g) belastete Hartmetallspitze (Spitzenradius: 0,5 mm) senkrecht auf die Beschichtung aufgesetzt und ca. 30 cm weit mit einer Geschwindigkeit von 20 - 30 cm/s über die Beschichtung geführt wurde. Die Bewertung erfolgte aus Sicht des Benutzers durch die Glaskeramik hindurch. Der Test gilt bei der gewählten Belastung als bestanden, wenn aus einem Abstand von 60 - 80 cm bei weißem Hintergrund und Tageslicht D65 kein Schaden erkennbar ist.

Die Kratzfestigkeit der Polyurethan-Schichten ist abhängig von der Vernetzungstemperatur und der Vernetzungszeit. Bei den vorgestellten Polyurethansystemen werden ab 140 °C (45 min) trockene, griffeste Schichten erhalten, deren Kratzfestigkeit im Bereich von 100 bis 200 g liegt. Erst ab 160 °C (45 min) werden deutlich höhere Kratzfestigkeiten von 300 g und darüber erhalten. Bei den Systemen (A) und (C) führte eine Temperaturerhöhung zu keiner weiteren Steigerung der Kratzfestigkeit, während die Kratzfestigkeit des Systems (B) und des ε-Caprolactam-blockierten Systems (D) durch Temperaturerhöhung auf 200 °C (45 min) auf 600 g gesteigert werden konnte. Die weitere Erhöhung der Vernetzungstemperatur auf bis zu 240 °C ergab keine weitere Steigerung der Kratzfestigkeit. Mit den Varianten (E) und (F) können jedoch durch Vernetzung bei 240 °C extrem hohe Kratzfestigkeiten von 800 g bis über 1000 g realisiert werden. Die Ursache für die hohe Kratzfestigkeit dieser Varianten liegt in der hohen Vernetzungsdichte, die aufgrund des Härterüberschusses erreicht werden kann. Auffallend ist auch die hohe Kratzfestigkeit der Variante (G), die vermutlich auf den enthaltenen Glimmerplättchen beruht. Variante (H), die auf einer vergleichbaren Bindemittelzusammensetzung wie Variante (A) beruht, hat erwartungsgemäß eine mit Variante (A) vergleichbare Kratzfestigkeit.

Die Haftfestigkeit der ausgehärteten Polyurethanschichten (A) bis (I) ist ausreichend. Sie wurde mit dem sogenannten "TESA-Test" geprüft, wobei auf die ausgehärtete Beschichtung ein Streifen transparenten Klebefilms angerieben und dann ruckartig abgerissen wird (Tesafilm Typ 104, Beiersdorf AG). Da die Beschichtungen mit dem Klebestreifen von der Glaskeramik nicht abgelöst werden können, sind sie ausreichend haftfest.

Es zeigte sich jedoch, dass bei der Belastung mit Wasser (24 Std.) die Haftfestigkeit bei einigen Systemen drastisch verringert wird. Die Beschichtungen (A) bis (D) werden nach der Behandlung mit Wasser durch den "TESA-Test" von dem Glaskeramiksubstrat abgelöst. Da die Displayschichten in der Praxis jedoch einer derart starken Feuchte nicht ausgesetzt sind, wird die Haftfestigkeit als ausreichend eingeschätzt. Bei hoher Feuchte würde z.B. die Elektronik in der Kochmulde beschädigt, eisenhaltige Bauteile (Rahmen etc.) würden korrodieren und kapazitive Berührungsschalter unterhalb des Displaybereichs würden aufgrund der elektrischen Leitfähigkeit von Wasser nicht mehr funktionieren. Die Behandlung mit Wasser kann dazu eingesetzt werden, fehlerhafte, ausgehärtete Displayschichten von dem Substrat wieder abzulösen, um die Beschichtung des Displaybereichs erneut vorzunehmen.

Die Beständigkeit gegenüber Wasser kann verbessert werden, wenn bei höherer Temperatur vernetzt wird. So besteht beispielsweise Variante (C) nach 24stündiger Belastung mit Wasser den "TESA-Test", wenn die Beschichtung bei 200 °C (45 min) vernetzt wird. Variante (A) besteht den "TESA-Test" nach Belastung mit Wasser, wenn die Beschichtung bei 240 °C (45 min) vernetzt wird. Dagegen haben die Zusammensetzungen (G) und (H) bereits bei der üblichen Vernetzungstemperatur (160 °C) auch nach Belastung mit Wasser eine ausreichende Haftfestigkeit. Dieses Ergebnis deutet darauf hin, dass die Haftfestigkeit der Varianten (A) bis (F) durch das enthaltene Laropal^{®} A 81 herabgesetzt wird, bzw., dass durch Abwesenheit von Laropal^{®} A 81 (oder anderen, nicht feuchtigkeitsbeständigen Harzen) Beschichtungen mit gesteigerter Haftfestigkeit erhalten werden können.

Die Stoßfestigkeit der Glaskeramik wird durch die gut haftenden Polyurethanschichten überraschender Weise nicht herabgesetzt. Offenbar sind die Schichten trotz ihrer Härte ausreichend elastisch, um Spannungsunterschiede aufgrund unterschiedlicher thermischer Ausdehnung auszugleichen. Die Stoßfestigkeit wurde durch Kugelfalltest mit einer Stahlkugel (200 g, 36 mm Durchmesser) bestimmt.

Obwohl die Displayschichten (A) bis (F) ein elektrisch leitfähiges Pigment enthalten (3,6 Gew.-% Ruß bezogen auf die ausgehärtete Schicht), sind die Beschichtungen geeignet für kapazitive Berührungsschalter. Die Prüfung erfolgte mit Hilfe eines Touch-Control-Bedienfelds von E.G.O. Über die kapazitiven Berührungsschalter der Einheit konnten die Kochzonen problemlos geschaltet werden, wenn die Displayschichten mit den Zusammensetzungen (A) bis (F) oberhalb der Berührungsschalter (8) angeordnet waren (Fig.1). Denn der elektrische Flächenwiderstand der Beschichtungen liegt bei Zimmertemperatur (20 °C) bei über 350 GΩ/Quadrat (30 GΩ/Quadrat bei 100 °C, 1 GΩ/Quadrat bei 150 °C). Als ausreichend für die störungsfreie Funktion von kapazitiven Berührungsschaltern wird ein Flächenwiderstand im Mega-Ohm-Bereich angesehen. Auch die Displayschichten (G), (H) und (I) sind geeignet für kapazitive Berührungsschalter.

Der Flächenwiderstand einer Displaybeschichtung kann relativ einfach mit einem Ohmmeter bestimmt werden, indem die beiden Elektroden des Messgeräts möglichst nahe beieinander (mit ca. 0,5 - 1 mm Abstand) auf die Beschichtung aufgesetzt werden. Der vom Messgerät angezeigte Widerstand entspricht in etwa dem Flächenwiderstand der Beschichtung.

Die mit Ruß pigmentierten Displayschichten der Zusammensetzung (A) bis (F) sowie Variante (G) sind nicht geeignet für Infrarot-Berührungsschalter, weil die Transmission im nahen Infrarotbereich (bei 940 nm) bei 25 % oder darunter liegt (vgl. Fig.4 und DE 10 2009 010 952). Aufgrund der hohen Transmission für Licht der Wellenlänge 940 nm (88 %) sind allerdings die Zusammensetzungen (H) und (I) hervorragend geeignet für Infrarot-Berührungsschalter. In diesem Punkt übertreffen die Varianten (H) und (I) die in DE 10 2006 027 739 B4 vorgestellten Edelmetallschichten, die ausschließlich für kapazitive Berührungsschalter, nicht aber für IR-Berührungsschalter geeignet sind.

Die Stabilität des Farbtons der Displayschichten (A), (D) und (H) wurde stellvertretend für alle anderen Rezepturen durch Vergleichen der Farbwerte geprüft, die vor und nach der thermischen Belastung (12 Stunden 150 °C oder 45 min 200 °C) erhalten wurden.

Die Farbwerte der Beschichtungen mit der Zusammensetzung (A), (D) und (H) - vor und nach thermischer Belastung - sind in Tabelle 5 aufgeführt. Sie wurden mit einem Spektralphotometer (Mercury 2000, Fa. Datacolor; Lichtart D65; Beobachtungswinkel: 10°) aus Sicht des Benutzers, d.h., durch das Substrat hindurch gemessen, hindurch gemessen, wobei unter die Displayschicht die Weißkachel, die auch zur Kalibrierung des Meßgeräts verwendet wird, gelegt wurde. Diese Maßnahme ist notwendig, weil die transparenten Displayschichten zum Farbortvergleich gegen einen reproduzierbar gleichen Hintergrund gemessen werden müssen. Die Angabe der Farbwerte erfolgt nach dem CIELAB-System (DIN 5033, Teil 3 "Farbmaßzahlen"). Gemäß DIN 6174 betrug der Farbunterschied ΔE maximal 0,2 bis 0,4. Der bestimmte Farbunterschied ist sehr gering, er liegt im Bereich der Meßgenauigkeit (0,1 - 0,2) oder knapp darüber. Bei der Prüfung mit dem normalsichtigen Auge war nach 12 Stunden 150 °C kein Farbunterschied, nach 45 min 200 °C ein kleiner, kaum wahrnehmbarer Farbunterschied erkennbar. Die Polyurethansysteme sind daher ausreichend beständig gegenüber der erwarteten thermischen Belastung.

In Tabelle 6 sind die Eigenschaften der diskutierten Displaybeschichtungen zusammengefaßt.

**Tab.6: Eigenschaften von Displayschichten auf Glaskeramik**

| Eigenschaft | Zusammensetzung | | | | | | | | |
|---|---|---|---|---|---|---|---|---|---|
| | A | B | C | D | E | F | G | H | I |
| Schichtdicke in [µm] (54-64) | 10,3±0,1 | 9,9±0,1 | 10,3±0,1 | 10,7±0,7 | 10,6±0,2 | 9,6±0,2 | 10,5±0,1 | 10,1±0,1 | 10,6±0,3 |
| Transmission τᵥᵢₛ | 8,2 % | 8,3 % | 10,6 % | 7,3% | 7,6 % | 9,7 % | 11,2 % | 3,0 % | 3,2 % |
| Transmission bei 400 nm | 5,9 % | 6,4 % | 8,0 % | 5,9 % | 5,9 % | 7,6 % | 5,1 % | 3,2 % | 3,5 % |
| Transmission bei 750 nm | 9,0 % | 8,9 % | 11,4 % | 7,9 % | 8,3 % | 10,3 % | 187 % | 80,6 % | 81,2 % |
| Transm issionsunterschied ΔT₄₀₀ₙₘ₋₇₅₀ₙₘ | 3,1 % | 2,5 % | 3,4 % | 2,0 % | 2,4 % | 2,7 % | 13,6 % | 77,4 % | 777 % |
| Transmission bei 940 nm | 10,0 % | 9,9 % | 12,6 % | 8,8 % | 9,3 % | 11,4 % | 25,8 % | 88,3 % | 87,7 % |
| Eignung für IR-Touch Sensoren | nein | nein | nein | nein | nein | nein | nein | ja | ja |
| Eignung für kapazitive Sensoren | ja | ja | ja | ja | ja | ja | ja | ja | ja |
| Kratzfestigkeit (Vernetzungstemperatur) | 400 g (160 °C) | 600 g (200 °C) | 300 g (160 °C) | 600 g (200 °C) | 800 g (240 °C) | > 1000 g (240 °C) | 800 g (160 °C) | 500 g (160 °C) | 400 g (200 °C) |
| Haftfestigkeit | o.k. | o.k. | o.k. | o.k. | o.k. | o.k. | o.k. | o.k. | o.k. |
| Rauheit der Schicht [µm] | 0,012± 0,001 | 0,011± 0,001 | 0,017± 0,001 | 0,017 ± 0,001 | 0,010 ± 0,001 | 0,012± 0,001 | 0,428± 0,078 | 0,002± 0,001 | 0,016± 0,002 |
| Sicht in Kochmulde ausreichend vermindert | ja | ja | ja | ja | ja | ja | ja | ja | ja |
| ausreichend durchlässig für Leuchtanzeigen | ja | ja | ja | ja | ja | ja | ja | ja | ja |
| Viskosität bei 200 s⁻¹ (mPa s) | 1330 | 810 | 500 | 1050 | 1040 | 940 | 1210 | 1210 | 2900 |
| Streuung bei 400 nm | 3,7 % | 4,1 % | 4,4 % | 3,8 % | 4,0 % | 4,9 % | 4,6 % | 0,01 % | 0,05 % |
| Streuung bei 750 nm | 5,1 % | 4,6 % | 5,7 % | 4,3 % | 4,8 % | 6,0 % | 15,8 % | 0,79 % | 0,83 % |

In einer weiteren Ausführungsform können die Polyurethanschichten auch als Displayschichten für Kochflächen verwendet werden, die unterseitig mit farbgebenden Edelmetallschichten versehen sind. Kochflächen mit Edelmetallschichten als Unterseitenbeschichtung sind z.B. aus DE 10 2005 046 570 B4 und DE 10 2008 020 895 B4 bekannt. Im Anzeigebereich sind die opaken Edelmetallschichten ausgespart. Die Beschichtung des Anzeigebereichs mit den vorgestellten Polyurethansystemen ergibt eine Displayschicht, die - wie bereits beschrieben - ausreichend durchlässig für das Licht der Leuchtelemente ist und gleichzeitig die Sicht in das Innere der Kochmulde wirksam verhindert.

Die Polyurethanbeschichtung (5) kann gemäß Fig.6 überlappend auf die eingebrannte Edelmetallschicht (2) aufgetragen und thermisch ausgehärtet werden. Wenn ein Polyurethansystem verwendet wird, das mit Ruß pigmentiert oder mit organischen Farbmitteln gefärbt ist, kann durch eine solche Polyurethanbeschichtung z.B. die in DE 10 2006 027 739 B2 genannte Edelmetalldisplayschicht ersetzt werden, ohne dass Einbußen hinsichtlich der Anzeigequalität (Streuung, Transmission im sichtbaren Spektralbereich) hingenommen werden müssen.

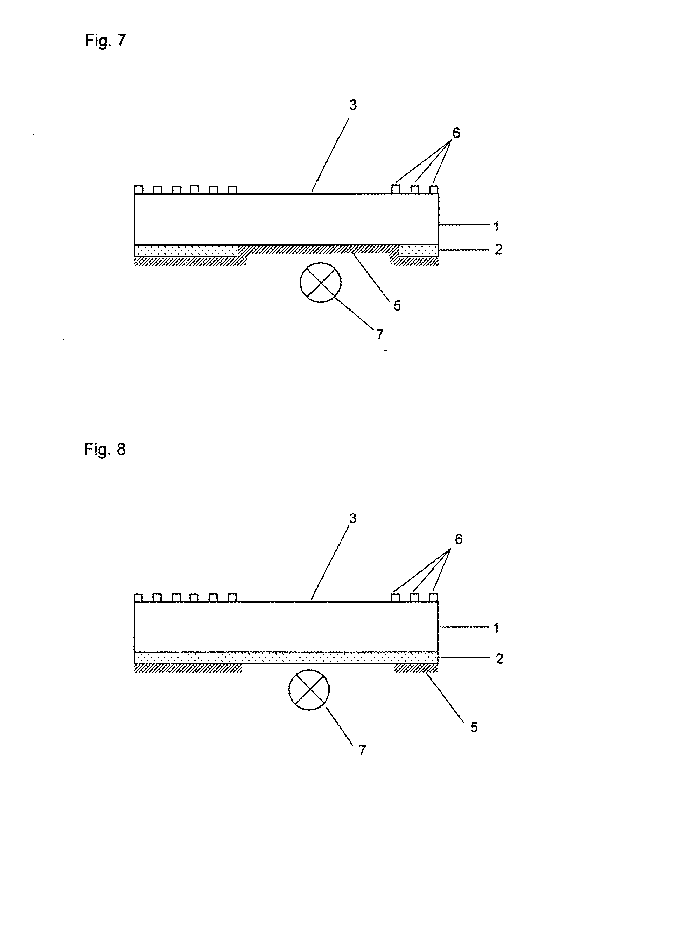

Die Polyurethanbeschichtung (5) kann aber auch zusätzlich zu dem Displaybereich über die gesamte Edelmetallschicht aufgetragen werden (Fig.7). Bereiche, die bei dem Betrieb der Kochfläche heißer als 250 °C werden, sollten dann jedoch ausgespart werden, um die Bildung von Zersetzungsprodukten im Betrieb zu vermeiden. Die Polyurethanschicht hat dann neben der Funktion als Displayschicht auch die Funktion einer Schutzschicht, weil sie die Edelmetallschicht (2) vor Verkratzen oder vor dem Eindringen von Fetten oder Siliconen (z.B. aus Klebstoffen) schützen kann. Diese Ausführungsform, bei der die Polyurethanschicht nicht nur im Displaybereich aufgebracht wird, sondern über nahezu die gesamte Kochfläche, hat den Vorteil, dass keine weitere Schutzschicht aufgebracht werden muss.

Durch die Polyurethanschicht können nicht nur Edelmetallschichten vor dem Verkratzen oder vor dem Eindringen von Fetten oder Siliconen geschützt werden, sondern auch Sol-Gel-Schichten, gesputterte Schichten oder glasbasierte Schichten. In besonderen Fällen ist die Farbe der Polyurethanschicht an die Farbe der farbgebenden Schicht angepasst, so dass durch die Polyurethanschicht Fehlstellen in der farbgebenden Schicht kaschiert werden.

In weiteren Ausführungsformen analog zu Fig.1, Fig.2 und Fig.3 kann zum Schutz der Edelmetallschicht (2) auch eine andere Farbe (4), z.B. ein siliconmodifiziertes Alkydharzsystem eingesetzt werden, das evtl. noch farblich an das Edelmetallsystem angepasst ist, um Fehlstellen wie z.B. Löcher in der Edelmetallschicht zu kaschieren. Wie bereits erwähnt, muss bei den Varianten gemäß Fig.2 oder Fig.3 die Deckschicht (4) bei Temperaturen bis 250 °C aushärtbar sein, da bei höheren Temperaturen die Zersetzung des Polyurethansystems beginnt. Mit einer grauen Schutzschicht (4) können beispielsweise Löcher in einer silbernen Edelmetallbeschichtung kaschiert werden, mit einer schwarzen Schutzschicht können Löcher in einer schwarzen Edelmetallschicht kaschiert werden. Es zeigte sich, dass das Polyurethansystem ausreichend verträglich mit Alkydharzsystemen ist, so dass an den Stellen, wo die Schichten überlappen, keine Haftungsprobleme auftreten.

Bei Bedienblenden, Dekorblenden, optischen Linsen, Backofenscheiben, Kaminsichtscheiben oder anderen Bauteilen, die nicht heißer als 200 °C werden, z.B. auch Kochflächen mit ausgefeilter Temperaturkontrolle, ergeben sich weitere Kombinationsmöglichkeiten für das vorgestellte Polyurethansystem.

Die erste Farblage auf dem Substrat kann dann auch aus Polyurethan bestehen. Durch Hinterdrucken mit einer oder weiteren Lagen Polyurethanfarbe können so Displaybereiche und lichtundurchlässige Bereiche (Transmission unter 1 %) erzeugt werden. Sowohl die Ausführung gemäß Fig.7, als auch die inverse Ausführung gemäß Fig.8 ist möglich, wobei die erste Farblage (2) oder die zweite Farblage (5) oder beide Farblagen in mindestens einem Bereich ausgespart sind und sich auf derselben Substratseite befinden.

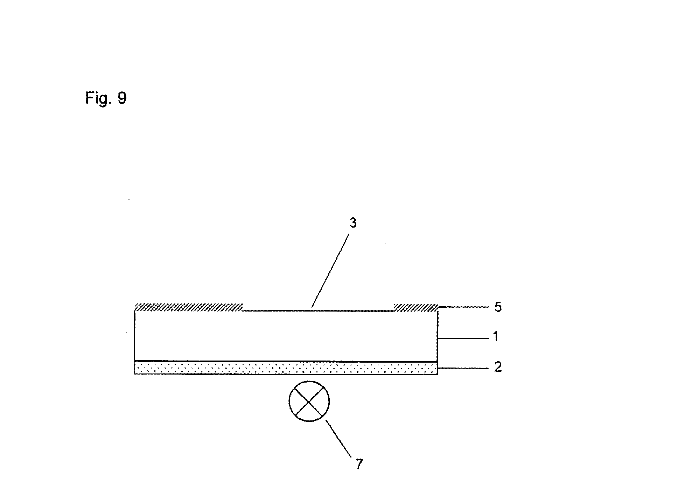

Bei Bedien- oder Dekorblenden oder anderen Bauteilen, bei denen diejenige Seite, die dem Benutzer zugewandt ist, mechanisch nicht übermäßig beansprucht wird, können die Polyurethanschichten (2) und (5) auch auf gegenüberliegenden Seiten aufgebracht werden. Gemäß Fig.9 können so ebenfalls Displaybereiche und lichtundurchlässige Bereiche erzeugt werden. Je nach gewünschter Transparenz können auf einer Seite auch mehrere, gleichfarbige oder verschiedene Farblagen übereinander angeordnet werden. Die Polyurethanschichten können auch mit anderen Beschichtungen (Emails, Epoxidharz-, Polyamid-Schichten u.a.) durch Überdrucken und Aussparen kombiniert werden.

### Bezugszeichenliste

- 1: Substrat
- 2: farbgebende Schicht
- 3: Displaybereich
- 4: Deckschicht
- 5: Displayschicht
- 6: Oberseitendekor
- 7: Leuchtmittel
- 8: Berührungsschalter

## Patentansprüche

1. Glatter, transparenter Glas- oder Glaskeramik-Formkörper aus Substrat und transparenter Beschichtung aus einem eingefärbten Polyurethansystem,
**dadurch gekennzeichnet, dass**
die Polyurethanbeschichtung ein mit einer H-aciden Verbindung thermisch vernetztes Polyisocyanat enthält und der beschichtete Formkörper eine Transmission τᵥᵢₛ für das sichtbare Licht im Bereich von 1 - 20 hat und dass die Rauheit Ra des Substrats und/oder der Beschichtung unter 0,5 µm liegt.

2. Formkörper nach Anspruch 1,
**dadurch gekennzeichnet, dass**
das Ausgangsmaterial für die Polyurethanbeschichtung aus einem blockierten Polyisocyanat und einer H-aciden Verbindung besteht, wobei das blockierte Polyisocyanat ein aliphatisches, aromatisches, cycloaliphatisches oder araliphatisches Polyisocyanat ist, und wobei das blockierte Polyisocyanat bevorzugt ein aliphatisches Polyisocyanat auf Basis von Hexamethylendiisocyanat ist.

3. Formkörper nach Anspruch 2,
**dadurch gekennzeichnet, dass**
das blockierte Polyisocyanat ein mittleres Molekulargewicht von 800 bis 10000 g/mol, insbesondere von 1000 bis 1100 g/mol hat.

4. Formkörper nach den Ansprüchen 2 und 3,
**dadurch gekennzeichnet, dass**
das blockierte Polyisocyanat 2 bis 50, insbesondere 2 bis 6 blockierte Isocyanatgruppen pro Molekül aufweist.

5. Formkörper nach den Ansprüchen 1 bis 4,
**dadurch gekennzeichnet, dass**
die H-acide Verbindung ein Polyol, vorzugsweise ein, vorzugsweise verzweigtes Polyesterpolyol und/oder ein Polyetherpolyol ist und/oder ein Amin, ein Polyamin, ein
Umesterungsprodukt von Rizinusöl, Leinöl oder Sojaöl mit Triolen, ein Alkyd-, Epoxid-, Silicon-, Phenol- oder Polyacrylatharz, ein Vinylpolymer und/oder ein Celluloseester ist, wobei
das verzweigte Polyesterpolyol ein mittleres Molekulargewicht von 1000 bis 2000 g/mol hat und
einen Hydroxylgruppenanteil von 3 und mehr Hydroxylgruppen pro Molekül hat.

6. Formkörper nach den Ansprüchen 1 bis 5,
**dadurch gekennzeichnet, dass**
das Ausgangsmaterial für die Polyurethanbeschichtung das blockierte Polyisocyanat und die H-acide Verbindung in dem Äquivalent-Verhältnis 1:1 bis 2:1, vorzugsweise 1,1:1 bis 1,6:1 enthält.

7. Formkörper nach den Ansprüchen 1 bis 6,
**dadurch gekennzeichnet, dass**
die Polyurethanbeschichtung einen Polyurethananteil im Bereich zwischen 55 und 99,9 Gew.-% aufweist.

8. Formkörper nach den Ansprüchen 1 bis 7,
**dadurch gekennzeichnet, dass**
die Polyurethanbeschichtung organische und/oder anorganische Buntpigmente und/oder Weißpigmente und/oder Schwarzpigmente enthält, wobei die Pigmente einen mittleren Teilchendurchmesser 1- 25 µm, vorzugsweise 5- 10 µm aufweisen und die Beschichtung bevorzugt Monazopigmente, Diazopigmente, polycyclische Pigmente, Eisenoxidpigmente, Chromoxidpigmente, oxidische Mischphasenpigmente mit Rutil- oder Spinellstruktur, Ruß, Graphit, TiO₂, ZrO₂, Carbonate oder Sulfide aufweist.

9. Formkörper nach den Ansprüchen 1 bis 8,
**dadurch gekennzeichnet, dass**
die Polyurethanbeschichtung flüssigkristalline Pigmente und/oder organische und/oder anorganische Glanzpigmente und/oder Leuchtpigmente aufweist, wobei
die Glanzpigmente als gecoatete und/oder ungecoatete plättchenförmige Pigmente ausgebildet sind, und bevorzugt eine maximale Kantenlänge von 100 µm, vorzugsweise von 10 µm aufweisen.

10. Formkörper nach den Ansprüchen 1 bis 9,
**dadurch gekennzeichnet, dass**
die Polyurethanbeschichtung mindestens einen organischen und/oder anorganischen Farbstoff aufweist, wobei
der organische und/oder anorganische Farbstoff ein Bunt- und/oder Schwarzfarbstoff und/oder ein Leuchtfarbstoff ist und in dem Ausgangsmaterial für die Polyurethanbeschichtung löslich ist, und wobei der organische Farbstoff ein Acridin, Kupferphthalocyanin, Phenthiazinblau, Disazobraun, Chinolingelb ist, ein Cobalt-, Chrom- oder Kupfer-Metallkomplexfarbstoff der Azo-, Azomethin- oder Phthalocyanin-Reihe ist, ein Azochromkomplexschwarz, Phenazinflexoschwarz, Thioxanthengelb, Benzanthronrot, Perylengrün ist und vorzugsweise ein Chrom-Metallkomplexfarbstoff ist.

11. Formkörper nach den Ansprüchen 1 bis 10,
**dadurch gekennzeichnet, dass**
die Polyurethanbeschichtung einen Farbmittelanteil im Bereich zwischen 0,1 und 45 Gew.-% aufweist.

12. Formkörper nach den Ansprüchen 1 bis 11,
**dadurch gekennzeichnet, dass**
die Polyurethanbeschichtung eine Schichtdicke im Bereich von 0,1 bis 1000 µm, vorzugsweise 5 bis 20 µm, aufweist.

13. Formkörper nach den Ansprüchen 1 bis 12,
**dadurch gekennzeichnet, dass**
das Ausgangsmaterial für die Polyurethanbeschichtung Lösungsmittel und/oder Verdickungsmittel und/oder Thixotropiermittel und/oder Entschäumer und/oder Netzmittel und/oder Verlaufsmittel und/oder Katalysatoren aufweist, wobei
das Lösungsmittel aprotisch und mittelflüchtig (VD = 10 bis 35) oder schwerflüchtig (VD > 35) ist, wobei
das Verdickungsmittel ein bei 20 °C festes oder zähflüssiges Polyacrylat ist, ein Polysiloxan, ein thixotropiertes Acrylharz, ein isocyanat- oder urethanthixotropiertes Alkydharz, ein Wachs, ein assoziativer Verdicker, insbesondere ein assoziativer Acrylatverdicker, ein hydrophob modifizierter Celluloseether, Etherurethan, Polyether oder ein modifizierter Harnstoff ist oder eine amorphe Kieselsäure, vorzugsweise eine hydrophile, pyrogene Kieselsäure, ein Organoschichtsilicat oder eine Metattseife ist, und wobei der Katalysator ein tertiäres Amin ist und/oder ein metallhaltiges Salz ist, vorzugsweise ein Zink-, Cobalt-, Eisen-, Zinn(IV)-, Zinn(II)- oder Antimon-Salz wie Zinn(IV)-Alkoxylat, Dibutylzinndilaurat, Tetra-(2-ethylhexyl)-titanat, Zink- oder Cobaltnaphthenat.

14. Formkörper nach den Ansprüchen 1 bis 13,
**dadurch gekennzeichnet, dass**
die Polyurethanbeschichtung einen Verdickeranteil im Bereich zwischen 0,1 bis 25 Gew.-% aufweist.

15. Formkörper nach den Ansprüchen 1 bis 14,
**dadurch gekennzeichnet, dass**
die Polyurethanbeschichtung zumindest eine umgebende Beschichtung teilweise oder großflächig bedeckt, oder
von mindestens einer umgebenden Beschichtung zumindest teilweise bedeckt wird, wobei
die umgebende Beschichtung eine Edelmetall-, Sol-Gel-, Alkydharz-, Silicon-, Epoxidharz- oder Polyamidbeschichtung, eine glasbasierte Beschichtung oder eine Polyurethanbeschichtung ist.

16. Formkörper nach den Ansprüchen 1 bis 15,
**dadurch gekennzeichnet, dass**
er als Scheibe, als Kochfläche, Bedienblende, optische Linse, Kaminsichtscheibe, Backofenscheibe, Anzeigenbereich, Armatur oder Autoscheibe ausgebildet ist, wobei
die Polyurethanbeschichtung einseitig oder beidseitig aufgebracht ist oder die beidseitige Polyurethanbeschichtung auf mindestens einer Seite teil-weise ausgespart ist.

## Claims

1. Smooth, transparent shaped glass or glass-ceramic body composed of a substrate and a transparent coating composed of a coloured polyurethane system, **characterized in that** the polyurethane coating contains a polyisocyanate which has been thermally crosslinked by means of an H-acid compound and the coated shaped body has a transmission τ_{vic} for visible light in the range 1 - 20% and **in that** the roughness Ra of the substrate and/or of the coating is less than 0.5 µm.

2. Shaped body according to Claim 1, **characterized in that** the starting material for the polyurethane coating consists of a blocked polyisocyanate and an H-acid compound, where the blocked polyisocyanate is an aliphatic, aromatic, cycloaliphatic or araliphatic polyisocyanate and the blocked polyisocyanate is preferably an aliphatic polyisocyanate based on hexamethylene diisocyanate.

3. Shaped body according to Claim 2, **characterized in that** the blocked polyisocyanate has an average molecular weight of from 800 to 10 000 g/mol, in particular from 1000 to 1100 g/mol.

4. Shaped body according to either of Claims 2 and 3, **characterized in that** the blocked polyisocyanate has from 2 to 50, in particular from 2 to 6 blocked isocyanate groups per molecule.

5. Shaped body according to any of Claims 1 to 4, **characterized in that** the H-acid compound is a polyol, preferably a, preferably branched polyester polyol and/or a polyether polyol, and/or an amine, a polyamine, a transesterification product of castor oil, linseed oil or soya bean oil with triols, an alkyd, epoxy, silicone, phenol or polyacrylate resin, a vinyl polymer and/or a cellulose ester, where the branched polyester polyol has an average molecular weight of from 1000 to 2000 g/mol and a hydroxyl group content of 3 and more hydroxyl groups per molecule.

6. Shaped body according to any of Claims 1 to 5, **characterized in that** the starting material for the polyurethane coating contains the blocked polyisocyanate and the H-acid compound in the equivalence ratio of from 1:1 to 2:1, preferably from 1.1:1 to 1.6:1.

7. Shaped body according to any of Claims 1 to 6, **characterized in that** the polyurethane coating has a polyurethane content in the range from 55 to 99.9% by weight.

8. Shaped body according to any of Claims 1 to 7, **characterized in that** the polyurethane coating contains organic and/or inorganic coloured pigments and/or white pigments and/or black pigments, where the pigments have an average particle diameter of 1-25 µm, preferably 5-10 µm, and the coating preferably comprises monoazo pigments, diazo pigments, polycyclic pigments, iron oxide pigments, chromium oxide pigments, oxidic mixed phase pigments having a rutile or spinel structure, carbon black, graphite, TiO₂, ZrO₂, carbonates or sulphides.

9. Shaped body according to any of Claims 1 to 8, **characterized in that** the polyurethane coating comprises liquid-crystalline pigments and/or organic and/or inorganic lustre pigments and/or luminous pigments, where the lustre pigments are coated and/or uncoated platelet-like pigments and preferably have a maximum edge length of 100 µm, more preferably 10 µm.

10. Shaped body according to any of Claims 1 to 9, **characterized in that** the polyurethane coating comprises at least one organic and/or inorganic dye, where the organic and/or inorganic dye is a coloured and/or black dye and/or a luminous dye and is soluble in the starting material for the polyurethane coating and the organic dye is an acridine, copper phthalocyanine, phenothiazine blue, disazo brown, quinoline yellow, a cobalt, chromium or copper complex dye of the azo, azomethine or phthalocyanine series, an azo chromium complex black, phenazine flexo black, thioxanthene yellow, benzanthrone red, perylene green and preferably a chromium metal complex dye.

11. Shaped body according to any of Claims 1 to 10, **characterized in that** the polyurethane coating has a dye content in the range from 0.1 to 45% by weight.

12. Shaped body according to any of Claims 1 to 11, **characterized in that** the polyurethane coating has a layer thickness in the range from 0.1 to 1000 µm, preferably from 5 to 20 µm.

13. Shaped body according to any of Claims 1 to 12, **characterized in that** the starting material for the polyurethane coating comprises solvents and/or thickeners and/or thixotropes and/or antifoams and/or wetting agents and/or levelling agents and/or catalysts, where the solvent is aprotic and of medium volatility (VD = 10 to 35) or low volatility (VD > 35), the thickener is a polyacrylate which is solid or viscous at 20°C, a polysiloxane, a thixotropic acrylic resin, an alkyd resin which has been made thixotropic by isocyanate or urethane, a wax, an associative thickener, in particular an associative acrylate thickener, a hydrophobically modified cellulose ether, ether urethane, polyether or a modified urea or an amorphous silica, preferably a hydrophilic, pyrogenic silica, an organic sheet silicate or a metal soap and the catalyst is a tertiary amine and/or a metal-containing salt, preferably a zinc, cobalt, iron, tin(IV), tin(II) or antimony salt such as tin(IV) alkoxylate, dibutyl tin dilaurate, tetra(2-ethylhexyl) titanate, zinc naphthenate or cobalt naphthenate.

14. Shaped body according to any of Claims 1 to 13, **characterized in that** the polyurethane coating has a thickener content in the range from 0.1 to 25% by weight.

15. Shaped body according to any of Claims 1 to 14, **characterized in that** the polyurethane coating at least partly covers a surrounding coating or covers it over the entire area or is at least partly covered by at least one surrounding coating, where the surrounding coating is a noble metal, sol-gel, alkyd resin, silicone, epoxy resin or polyamide coating, a glass-based coating or a polyurethane coating.

16. Shaped body according to any of Claims 1 to 15, **characterized in that** it is configured as a plate, as a cooking surface, control panel, optical lens, chimney sight glass, baking oven window, display region, fitting or automobile window, where the polyurethane coating is applied on one or both sides or the polyurethane coating applied on both sides is partly removed on at least one side.

## Revendications

1. Corps moulé en verre ou vitrocéramique transparent et lisse, constitué par un substrat et un revêtement transparent en un système de polyuréthane coloré,
**caractérisé en ce que**
le revêtement de polyuréthane contient un polyisocyanate réticulé thermiquement avec un composé à H acide et le corps moulé revêtu présente une transmission τᵥᵢₛ pour la lumière visible dans la plage allant de 1 à 20 %, et **en ce que** la rugosité Ra du substrat et/ou du revêtement est inférieure à 0,5 µm.

2. Corps moulé selon la revendication 1, **caractérisé en ce que** le matériau de départ pour le revêtement de polyuréthane est constitué par un polyisocyanate bloqué et un composé à H acide, le polyisocyanate bloqué étant un polyisocyanate aliphatique, aromatique, cycloaliphatique ou araliphatique, et le polyisocyanate bloqué étant de préférence un polyisocyanate aliphatique à base de diisocyanate d'hexaméthylène.

3. Corps moulé selon la revendication 2, **caractérisé en ce que** le polyisocyanate bloqué a un poids moléculaire moyen de 800 à 10 000 g/mol, notamment de 1 000 à 1 100 g/mol.

4. Corps moulé selon les revendications 2 et 3, **caractérisé en ce que** le polyisocyanate bloqué comprend 2 à 50, notamment 2 à 6 groupes isocyanate bloqués par molécule.

5. Corps moulé selon les revendications 1 à 4, **caractérisé en ce que** le composé à H acide est un polyol, de préférence un polyester-polyol, de préférence ramifié, et/ou un polyéther-polyol et/ou une amine, une polyamine, un produit de transestérification d'huile de ricin, d'huile de lin ou d'huile de soja avec des triols, une résine alkyde, époxyde, de silicone, de phénol ou de polyacrylate, un polymère de vinyle et/ou un ester de cellulose,
le polyester-polyol ramifié ayant un poids moléculaire moyen de 1 000 à 2 000 g/mol et ayant une proportion de groupes hydroxyle de 3 groupes hydroxyle et plus par molécule.

6. Corps moulé selon les revendications 1 à 5, **caractérisé en ce que** le matériau de départ pour le revêtement de polyuréthane contient le polyisocyanate bloqué et le composé à H acide en un rapport équivalent de 1:1 à 2:1, de préférence de 1,1:1 à 1,6:1.

7. Corps moulé selon les revendications 1 à 6, **caractérisé en ce que** le revêtement de polyuréthane présente une proportion de polyuréthane dans la plage comprise entre 55 et 99,9 % en poids.

8. Corps moulé selon les revendications 1 à 7, **caractérisé en ce que** le revêtement de polyuréthane contient des pigments colorés et/ou des pigments blancs et/ou des pigments noirs organiques et/ou inorganiques, les pigments présentant un diamètre de particule moyen de 1 à 25 µm, de préférence de 5 à 10 µm, et le revêtement comprenant de préférence des pigments monoazoïques, des pigments diazoïques, des pigments polycycliques, des pigments d'oxyde de fer, des pigments d'oxyde de chrome, des piments oxydiques à phases mixtes de structure rutile ou spinelle, du noir de carbone, du graphite, TiO₂, ZrO₂, des carbonates ou des sulfures.

9. Corps moulé selon les revendications 1 à 8, **caractérisé en ce que** le revêtement de polyuréthane comprend des pigments cristallins liquides et/ou des pigments brillants inorganiques et/ou des pigments luminescents,
les pigments brillants étant configurés sous la forme de pigments plaquettaires revêtus et/ou non revêtus, et présentant de préférence une longueur de bord maximale de 100 µm, avantageusement de 10 µm.

10. Corps moulé selon les revendications 1 à 9, **caractérisé en ce que** le revêtement de polyuréthane comprend au moins un colorant organique et/ou inorganique,
le colorant organique et/ou inorganique étant un colorant coloré et/ou noir et/ou un colorant luminescent, et étant soluble dans le matériau de départ pour le revêtement de polyuréthane, et
le colorant organique étant une acridine, la phtalocyanine de cuivre, le bleu de phénothiazine, le brun disazoïque, le jaune de quinoline, un colorant complexe métallique de cobalt, de chrome ou de cuivre de la série azo, azométhine ou phtalocyanine, un noir complexe de chrome azoïque, le noir de phénazine pour flexographie, le jaune de thioxanthène, le rouge de benzanthrone, le vert de pérylène, et de préférence un colorant complexe métallique de chrome.

11. Corps moulé selon les revendications 1 à 10, **caractérisé en ce que** le revêtement de polyuréthane présente une proportion de colorant dans la plage comprise entre 0,1 et 45 % en poids.

12. Corps moulé selon les revendications 1 à 11, **caractérisé en ce que** le revêtement de polyuréthane présente une épaisseur de couche dans la plage allant de 0,1 à 1 000 µm, de préférence de 5 à 20 µm.

13. Corps moulé selon les revendications 1 à 12, **caractérisé en ce que** le matériau de départ pour le revêtement de polyuréthane comprend des solvants et/ou des épaississants et/ou des agents thixotropiques et/ou des agents antimousses et/ou des agents mouillants et/ou des agents d'écoulement et/ou des catalyseurs,
le solvant étant aprotique et moyennement volatil (VD = 10 à 35) ou fortement volatil (VD > 35),
l'épaississant étant un polyacrylate solide ou visqueux à 20 °C, un polysiloxane, une résine acrylique thixotropée, une résine alkyde thixotropée par un isocyanate ou un uréthane, une cire, un épaississant associatif, notamment un épaississant acrylate associatif, un éther de cellulose modifié de manière hydrophobe, un éther-uréthane, un polyéther ou une urée modifiée, ou étant une silice amorphe, de préférence une silice pyrogénée hydrophile, un organophyllosilicate ou un savon métallique, et le catalyseur étant une amine tertiaire et/ou un sel contenant un métal, de préférence un sel de zinc, de cobalt, de fer, d'étain (IV), d'étain (II) ou d'antimoine, tel que l'alcoxylate d'étain (IV), le dilaurate de dibutylétain, le titanate de tétra-(2-éthylhexyle), le naphténate de zinc ou de cobalt.

14. Corps moulé selon les revendications 1 à 13, **caractérisé en ce que** le revêtement de polyuréthane présente une proportion d'épaississant dans la plage allant de 0,1 à 25 % en poids.

15. Corps moulé selon les revendications 1 à 14, **caractérisé en ce que** le revêtement de polyuréthane recouvre en partie ou sur une grande surface au moins un revêtement entourant, ou
est recouvert au moins en partie par au moins un revêtement entourant,
le revêtement entourant étant un revêtement de métal noble, sol-gel, de résine alkyde, de silicone, de résine époxyde ou de polyamide, un revêtement à base de verre ou un revêtement de polyuréthane.

16. Corps moulé selon les revendications 1 à 15, **caractérisé en ce qu'**il est configuré sous la forme d'une plaque, d'une surface de cuisson, d'un panneau de commande, d'une lentille optique, d'une vitre d'observation de cheminée, d'une vitre de four, d'une zone d'affichage, d'une garniture ou d'un pare-brise automobile,
le revêtement de polyuréthane étant appliqué d'un côté ou des deux côtés ou le revêtement de polyuréthane des deux côtés étant évidé en partie sur au moins un côté.
